(19) Europäisches Patentamt
European Patent Office
Office européen des brevets

(11) EP 0 774 827 B1

(12) EUROPEAN PATENT SPECIFICATION

(45) Date of publication and mention of the grant of the patent:
**26.09.2001 Bulletin 2001/39**

(51) Int Cl.[7]: **H02M 3/335**

(21) Application number: **96402449.1**

(22) Date of filing: **15.11.1996**

# (54) Switching power supply

Schaltnetzteil

Alimentation de puissance à découpage

(84) Designated Contracting States:
**DE FR GB**

(30) Priority: **17.11.1995 JP 32365595**
**06.09.1996 JP 25747496**

(43) Date of publication of application:
**21.05.1997 Bulletin 1997/21**

(73) Proprietor: **MURATA MANUFACTURING CO., LTD.**
**Nagaokakyo-shi Kyoto-fu 226 (JP)**

(72) Inventors:
- **Takahashi, Seiichi**
**Nagaokakyo-shi, Kyoto-fu (JP)**
- **Nishi, Koji**
**Nagaokakyo-shi, Kyoto-fu (JP)**
- **Ohashi, Yasuo**
**Nagaokakyo-shi, Kyoto-fu (JP)**

(74) Representative: **Joly, Jean-Jacques et al**
**Cabinet Beau de Loménie**
**158, rue de l'Université**
**75340 Paris Cédex 07 (FR)**

(56) References cited:
**EP-A- 0 255 326** **US-A- 5 377 093**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 774 827 B1

## Description

## BACKGROUND OF THE INVENTION

### 1. Field of the Invention

The present invention relates to a switching power supply, such switching power supplies being mainly used as DC-DC converters.

### 2. Description of the Related Art

Fig. 20 shows a main circuit of a switching power supply of the "flyback converter" type. The circuit includes a transformer 6 having a primary coil 3, a secondary coil 4, and a third coil 5; a switching element 7 constituted by a field effect transistor (FET); a current sensing circuit 9 constituted by a resistor 8; an AC input power supply 10; a diode bridge circuit 11; a smoothing capacitor 12; a starting resistor member 13; an IC-input capacitor 14; a diode 15; a switch control circuit 19 having an oscillator (OSC) 16, an RS flip-flop circuit 17, and a comparator 18 and integrated into a chip; a diode 20; a capacitor 21; and an output-voltage detecting circuit 27 having voltage-dividing resistor members 22 and 23, an error amplifier 24, a photo-coupler 25, and a reference power supply 26.

The operation of the circuit shown in Fig. 20 will be briefly described below by referring to a timing chart shown in Fig. 21. The OSC 16 in the switch control circuit 19 applies a constant-period pulse signal as shown in Fig. 21 (d) to the set input terminal (S) of the RS flip-flop circuit 17. When the RS flip-flop circuit 17 receives at its set input terminal (S) a set pulse from the OSC 16, it immediately outputs a gate pulse from its output terminal (Q) to the gate G of the switching element 7; the signal output by the RS flip-flop circuit 17 is shown in Fig. 21 (f). Then, the switching element 7 switches on in response to the gate pulse. When the switching element 7 is in the ON state , a current "i" based on the input power supply 10 and the voltage on the charged smoothing capacitor 12 flows through a path passing through the primary coil 3 of the transformer 6 and through the current sensing circuit 9 (resistor 8). Electromagnetic energy is accumulated at the primary coil 3 due to the flow of the current "i." The current sensing circuit 9 converts the current "i" to a voltage, and outputs the voltage to the non-inverting input terminal of the comparator 18 as a detected voltage $V_{cs}$ shown in Fig. 21(c).

During the switch-on period, the voltage across the capacitor 21 at the output side of the transformer 6 is output as the output voltage $V_{out}$ shown in Fig. 21 (a), and a fraction of the output voltage $V_{out}$ is measured by the voltage-dividing resistor members 22 and 23 in the output-voltage detecting circuit 27 and is input to the inverting input terminal of the error amplifier 24. A reference voltage output from the reference power supply 26 which is predetermined is applied to the non-inverting input terminal of the error amplifier 24. In accordance with the difference between the measured fraction of the output voltage $V_{out}$ and the reference voltage of the reference power supply 26, the error amplifier 24 outputs a voltage $V_e$ as shown in Fig. 21 (b) to the inverting input terminal of the comparator 18 through the photo-coupler 25 of the output-voltage detecting circuit 27, as the detected voltage $V_f$ shown in Fig. 21 (c).

When the detected voltage $V_{cs}$ of the current sensing circuit 9 reaches the detected voltage $V_f$ of the output-voltage detecting circuit 27, the comparator 18 applies a reset pulse to the reset input terminal (R) of the RS flip-flop circuit 17. When the RS flip-flop circuit 17 receives the reset pulse, it immediately stops outputting the gate pulse signal to the switching element 7 as shown in Fig. 21 (f), and the switching element 7 switches off.

When the switching element 7 is turned off, a current caused by energy accumulated in the transformer 6 is supplied as the output voltage $V_{out}$ via a loop passing through the secondary coil 4 and the diode 20. At the same time, a current caused by energy accumulated in the third coil 5 during the switch-on period flows through the diode 15 to the IC-input capacitor 14 to charge the capacitor. The circuit is then ready for the next occasion when the switching element 7 is switched on.

When the output voltage $V_{out}$ rises from a specified voltage, for example $V_{out}$ rises from $V_a$ to a voltage $V_b$ as shown in Fig. 21 (a), the output voltage $V_e$ of the error amplifier 24 in the output-voltage detecting circuit 27 becomes low as shown in Fig. 21 (b). Then, the detected voltage $V_f$ of the output-voltage detecting circuit 27 is lowered as shown in Fig. 21 (c), and the time period necessary for the detected voltage $V_{cs}$ of the current sensing circuit 9 to reach the detected voltage $V_f$ becomes shorter. In other words, the time period (the switch-on period of the switching element), from when the RS flip-flop circuit 17 starts outputting an on-level signal to the switching element 7 to when the RS flip-flop circuit 17 receives a reset pulse from the comparator 18, becomes shorter, electromagnetic energy accumulated in the primary coil 3 is reduced, and the rise in the output voltage $V_{out}$ relative to the specified voltage $V_a$ is compensated for and $V_{out}$ is stabilized.

On the other hand, when the output voltage $V_{out}$ becomes lower than the specified voltage $V_a$ then, in an inverse manner to the operation described above, the switch-on period of the switching element 7 is extended and electromagnetic energy accumulated in the primary coil 3 increases. The decrease in the output voltage $V_{out}$ relative to the specified voltage $V_a$ is compensated for, and $V_{out}$ is stabilized.

The above-described control method is generally known as the current-mode control method, in which a current passing through the circuit is detected and converted to a voltage, the switch-on period of the switching element 7 is controlled in accordance with the detected voltage and the output voltage, and the output voltage is stabilized. This control method is superior in response and provides stable control against changes in the output voltage $V_{out}$ compared with other methods such as the voltage-mode control method, since the circuit current is used in the former method.

However, when the circuit has a light load or receives a high input voltage, the current "i" flowing through the circuit decreases and the ratio of a noise factor to the current "i" inevitably becomes very large. Namely, the S/N ratio of the current "i" greatly decreases. Since the current sensing circuit 9 converts the current "i," which has a decreased S/N ratio, into a voltage and outputs it as the detected voltage $V_{cs}$, the S/N ratio of the detected voltage $V_{cs}$ is substantially reduced. The switch control circuit 19, which receives the detected voltage $V_{cs}$, cannot correctly control switching on and off of the switching element 7 due to adverse effects of the noise factor in the detected voltage $V_{cs}$. As a result, the output voltage $V_{out}$ is not positively stabilized.

## SUMMARY OF THE INVENTION

The present invention has been made with the aim of solving the above-described problem. Accordingly, it is an object of the present invention to provide a switching power supply of the current-mode control type, which can correctly control switching on and off of the switching element in order to stabilize the output voltage even at a light load or a high input voltage without being adversely affected by a noise factor in the detected voltage generated by the current sensing circuit.

The foregoing object is achieved according to one aspect of the present invention through the provision of a switching power supply having a switching element selectively operable to enable supply of an output voltage by the power supply; a current sensing circuit for converting a current flowing into the current sensing circuit into a voltage and for detecting and outputting said voltage; an output-voltage detecting circuit for detecting the voltage output by the power supply and outputting a voltage indicative thereof; and a switch control circuit of the current-mode control type for controlling the switch-on period of said switching element so as to stabilize said power supply output voltage according to the voltage output by said output-voltage detecting circuit and the conversion voltage output by said current sensing circuit, characterized in that there is provided a superimposition circuit for applying at least one of a superimposition current and a superimposition voltage to said current sensing circuit during the period when said switching element is in the ON state.

When the superimposition circuit supplies a superimposition current to the current sensing circuit, the current sensing circuit performs a conversion on a current which is the sum of the superimposition current and the circuit current to convert this summed current into a voltage and applies the voltage to a switch control circuit as a detected voltage. When the superimposition circuit applies a superimposition voltage to the current sensing circuit, the current sensing circuit converts the circuit current into a voltage and applies the voltage plus the superimposition voltage to a switch control circuit as a detected voltage. With superimposition operation of the superimposition circuit as described above, since the detected voltage of the current sensing circuit includes the specified superimposition component, when the circuit current becomes low due to a light load or a high input voltage, the decrease in S/N ratio of the detected voltage of the current sensing circuit is substantially reduced. The switch control circuit controls switching on and off of the switching element, largely without being adversely affected by noise in the detected voltage of the current sensing circuit, and the output voltage is positively stabilized.

The foregoing object is achieved according to another aspect of the present invention through the provision of a switching power supply of the above-described type in which the superimposition circuit applies both a superimposition current and a superimposition voltage to the current sensing circuit during the switch-on period of the switching element.

According to the latter aspect of the invention, the current sensing circuit converts into a voltage a current in which the superimposition current is added to the circuit current, and this voltage plus the superimposition voltage are applied to the switch control circuit as a detected voltage. Therefore, the S/N ratio of the detected voltage in the current sensing circuit is positively prevented from decreasing even at a light load or a high input voltage. This switch control circuit stabilizes the output voltage even more positively.

The circuit for supplying a superimposition voltage may be made up of a superimposition diode which generates the superimposition voltage.

When the superimposition circuit applies a superimposition voltage to the current sensing circuit, the current sensing circuit converts the circuit current into a voltage and applies the voltage plus the superimposition voltage to the switch control circuit as a detected voltge. The S/N ratio of the detected voltage of the current sensing circuit is positively prevented from decreasing even at a light load or a high input voltage. The switch control circuit positively stabilizes the output voltage. In addition, power loss at the superimposition diode is very small when a current flows through the diode, and power loss at the superimposition circuit is substantially reduced.

The switching power supply may further comprise a superimposition control circuit for detecting the circuit current and for controlling the superimposition circuit so as to perform superimposition operation only when the detected current is lower than a specified current value.

The superimposition circuit is preferably controlled such that superimposition operation is performed only when the circuit has a light load or receives a high input voltage and the circuit current is reduced below the specified current. Therefore, since the superimposition circuit does not operate in cases where there is a medium or high load or a low or medium input voltage, power loss at the superimposition circuit becomes zero in those cases. Accordingly power loss at the superimposition circuit is reduced.

In certain embodiments of the present invention, the superimposition circuit supplies the specified superimposition current to the current sensing circuit during a switch-on period of the switching element, for example, and the current sensing circuit converts the circuit current plus the superimposition current into a voltage, and detects and outputs it. The output-voltage detecting circuit detects the voltage output by the power supply and outputs a voltage indicative thereof. Since the detected voltage of the current sensing circuit includes a superimposition component based on the superimposition current and is biased by this superimposition component, the voltage detected by the current sensing circuit becomes larger and the S/N ratio of the detected voltage is prevented from decreasing substantially, even when the circuit has a light load or receives a high input voltage such that the circuit current becomes low. Therefore, the switch control circuit correctly controls switching on and off of the switching element according to the detected voltage of the current sensing circuit and the detected voltage of the output-voltage detecting circuit so as to stabilize the output voltage without being adversely affected by a noise component in the detected voltage of the current sensing circuit even at a light load or a high input voltage, and supplies the stable output voltage.

The above and other features and advantages of the present invention will become clear from the following description of preferred embodiments thereof, given by way of example, illustrated by reference to the accompanying drawings.

## BRIEF DESCRIPTION OF THE DRAWINGS

Fig. 1 is a circuit diagram indicating the main configuration of a switching power supply according to a first embodiment of the present invention.

Fig. 2 is a timing chart indicating current superimposition in a superimposition circuit shown in Fig. 1.

Fig. 3 is a circuit diagram of a switching power supply according to a second embodiment of the present invention.

Fig. 4 is a circuit diagram of a switching power supply according to a third embodiment of the present invention.

Fig. 5 is a circuit diagram of a switching power supply according to a fourth embodiment of the present invention.

Fig. 6 is a timing chart indicating voltage superimposition in a superimposition circuit shown in Fig. 5.

Fig. 7 is a circuit diagram of a switching power supply according to a fifth embodiment of the present invention.

Fig. 8 is a circuit diagram of a switching power supply according to a sixth embodiment of the present invention.

Fig. 9 is a circuit diagram of a switching power supply according to a seventh embodiment of the present invention.

Fig. 10 is a circuit diagram of a switching power supply according to an eighth embodiment of the present invention.

Fig. 11 is a timing chart indicating voltage superimposition in a superimposition circuit shown in Fig. 10.

Fig. 12 is a circuit diagram of a switching power supply according to a ninth embodiment of the present invention.

Fig. 13 is a graph indicating the relationship between the forward-direction voltage of a diode and the current flowing through the diode.

Fig. 14 is a circuit diagram of a superimposition circuit which applies a superimposition current and a superimposition voltage to a current sensing circuit, according to a tenth embodiment of the present invention.

Fig. 15 is a circuit diagram of a superimposition circuit which applies a superimposition current and a superimposition voltage to a current sensing circuit, according to an eleventh embodiment of the present invention.

Fig. 16 is a circuit diagram of a superimposition circuit which applies a superimposition current and a superimposition voltage to a current sensing circuit, according to a twelfth embodiment of the present invention.

Fig. 17 is a circuit diagram of a superimposition circuit which applies a superimposition current and a superimposition voltage to a current sensing circuit, according to a thirteenth embodiment of the present invention.

Fig. 18 is a circuit diagram of a superimposition circuit which applies a superimposition current and a superimposition voltage to a current sensing circuit, according to a fourteenth embodiment of the present invention.

Fig. 19 is a circuit diagram of a superimposition circuit which applies a superimposition current and a superimposition voltage to a current sensing circuit, according to a fifteenth embodiment of the present invention.

Fig. 20 is a circuit diagram of a conventional switching power supply.

Fig. 21 is a timing chart indicating the operation of the circuit shown in Fig. 20.

## DESCRIPTION OF THE PREFERRED EMBODIMENTS

Embodiments of the present invention will be described below by referring to the drawings. In the description of each embodiment, the same portions as those in the conventional circuit are designated by the same symbols and the description thereof will be omitted.

Fig. 1 shows a main circuit of a switching power supply according to a first embodiment. In the same way as in the conventional circuit shown in Fig. 20, the switch control circuit 19 shown in Fig. 1 has as components OSC 16, RS flip-flop circuit 17, and comparator 18, and is integrated into a chip. The switching operation of the switching element 7 is the same as that described for the conventional circuit. Also, in the same way as in the conventional circuit shown in Fig. 20, the output-voltage detecting circuit 27 shown in Fig. 1 has as components voltage-dividing resistor members 22 and 23, error amplifier 24, photo-coupler 25, and reference power supply 26. The output voltage is detected in the same way as in the conventional circuit.

The first embodiment differs from the conventional example mainly in that a superimposition circuit 2 constituted by a resistor 32 is connected in parallel to the primary coil 3. The superimposition circuit 2 generates a superimposition current "$i_1$" (shown in Fig. 2(c)) which is added to (superimposed on) a current "i" (shown in Fig. 2 (b)) which flows through the primary coil 3 during the period when the switching element 7 is in the ON state (the "switch-on period"). The resultant current "i + $i_1$" flows into a current sensing circuit 9. The remainder of the arrangement is the same as that in the conventional example.

The superimposition circuit 2 comprises the resistor 32 as described above, and supplies the superimposition current "$i_1$" shown in Fig. 2(c) to the current sensing circuit 9 during a switch-on period of the switching element 7.

In the first embodiment, since the resistor 32 constituting the superimposition circuit 2 is connected in parallel to the primary coil 3, when the current "i" flows through the primary coil 3 during the period when the switching element 7 is ON, the superimposition current "$i_1$" flows through the resistor 32. The superimposition current "$i_1$" from the superimposition circuit 2 is added to the current "i" flowing through the primary coil 3 and the current "i + $i_1$" flows into the current sensing circuit 9. When the circuit has a light load or receives a high input voltage, for example, even if the current "i" flowing through the primary coil 3 decreases to a current "i' " shown in Fig. 2(b), the current "i' + $i_1$", in which the constant superimposition current "$i_1$" has been added to the current "i' " flowing through the primary coil 3, flows into the current sensing circuit 9. Since the current "i" or " i' is biased by the superimposition current "$i_1$," the S/N ratio is prevented from becoming worse and the current sensing circuit 9 applies a detected voltage $V_{cs}$ having a good S/N ratio to the switch control circuit 19 even at a light load or a high input voltage. The switch control circuit 19 controls switching on and off of the switching element 7 largely without being adversely affected by a noise factor in the detected voltage $V_{cs}$, and the output voltage $V_{out}$ is positively stabilized.

Fig. 3 shows a second embodiment. The second embodiment differs from the first embodiment mainly in that the superimposition circuit 2 is provided in parallel to the gate G and the source S of the switching circuit 7 in order to reduce power loss at the superimposition circuit 2, instead of being connected in parallel to the primary coil 3. The remainder of the arrangement is the same as that in the first embodiment. Components corresponding to the input power supply 10, the diode bridge circuit 11, the smoothing capacitor 12, the starting resistor member 13, the IC-input capacitor 14, the third coil 5, and the diode 15 are all as shown in Fig. 1 and so are not shown in Fig. 3.

In the second embodiment, the superimposition circuit 2 applies the specified superimposition current "$i_1$" to the current sensing circuit 9 by making use of the gate pulse applied to the gate G of the switching element 7 from the switch control circuit 19 during a switch-on period of the switching element 7, and also applied to the current sensing circuit 9 during said switch-on period.

In the second embodiment, in the same way as in the first embodiment, since the superimposition circuit 2 is provided, when the current "i" flows through the primary coil 3 during a switch-on period of the switching element 7, the superimposition current "$i_1$" flows through the resistor 32 constituting the superimposition circuit 2. The superimposition current "$i_1$" in the superimposition circuit 2 is added to the current "i" flowing through the primary coil 3, and the current "i + $i_1$" flows into the current sensing circuit 9. Therefore, in the same way as in the first embodiment, even when the circuit has a light load or receives a high input voltage, the S/N ratio of the current flowing through the current sensing circuit 9 is, by means of the superimposition current "$i_1$", prevented from becoming worse. Thus, the current sensing circuit 9 applies a detected voltage $V_{cs}$ having a good S/N ratio to the switch control circuit 19. The switch control circuit 19 controls switching on and off of the switching element 7 largely without being adversely affected by a noise factor in the detected voltage $V_{cs}$, and the output voltage $V_{out}$ is positively stabilized.

During a switch-on period of the switching element 7, a voltage of about 100 V, for example, appears at point X which is on the input side of the primary coil 3 while a voltage of 10 to 20 V, for example, appears at point Y which is the junction point of the gate of the switching element 7 and the superimposition circuit 2. In this way, since the voltage at point Y is very much lower than that at point X, power loss in the superimposition circuit 2 can be further reduced in the second embodiment compared with the first embodiment.

Fig. 4 shows a third embodiment. In the third embodiment, a superimposition circuit 2 is formed by a series-connected diode 28 and resistor 32. The anode of the diode 28 is connected to point A where the starting resistor member 13 and the IC-input capacitor 14 are connected in series, and the cathode of the diode 28 is connected to one end of the resistor 32. The other end of the resistor 32 is connected to the drain D of the switching element 7. The configuration of components other than the superimposition circuit 2 is the same as that in the first and second embodiments. Components corresponding to the input power supply 10, the diode bridge circuit 11, and the smoothing capacitor 12 are all as shown in Fig. 1 and so are not shown in Fig. 4.

The superimposition circuit 2 shown in Fig. 4 supplies the specified superimposition current "$i_1$" to the current sensing circuit 9 by making use of the voltage of the charged IC-input capacitor 14. In the same way as in the first and second embodiments, since the current "$i + i_1$", in which the superimposition current "$i_1$" of the superimposition circuit 2 is added to the current "i" flowing through the primary coil 3, flows into the current sensing circuit 9 during a switch-on period, even when the circuit has a light load or receives a high input voltage, the current sensing circuit 9 outputs a detected voltage $V_{cs}$ having a good S/N ratio and the output voltage $V_{out}$ is positively stabilized. Also, in the same way as in the second embodiment, since the voltage at point A at the input side of the superimposition circuit 2 is lower than that at point X at the input side of the primary coil 3, power loss at the superimposition circuit 2 is further reduced in this embodiment compared with the first embodiment.

Fig. 5 shows a fourth embodiment. In the fourth embodiment, a superimposition circuit 2 has a capacitor 30 and transistors 34 and 35, and a superimposition voltage $V_c$ shown in Fig. 6(c) is applied to the current sensing circuit 9 during the switch-on period of the switching element 7. The configuration of circuits other than the superimposition circuit 2 is the same as that in each of the above-described embodiments and so the description thereof will be omitted. Components corresponding to the input power supply 10, the diode bridge circuit 11, the smoothing capacitor 12, the starting resistor member 13, the IC-input capacitor 14, the diode 15, the third coil 5 are all as shown in Fig. 1 and so are not shown in Fig. 5.

The superimposition circuit 2 shown in Fig. 5, including the capacitor 30 and the transistors 34 and 35 as described above, is connected, at point P, to a power supply different from the input power supply 10, and is provided in parallel to the gate G and the source S of the switching circuit 7. The voltage across the capacitor 30 attains a specified voltage $V_c$ (shown in Fig. 6 (c)) during the switch-on period of the switching element 7, and the superimposition circuit 2 applies the voltage $V_c$ as a superimposition voltage to the current sensing circuit 9. Therefore, the current sensing circuit 9 applies to the switch control circuit 19 the detected voltage $V_{cs}$ (shown in Fig. 6 (d)) which is generated by adding the superimposition voltage $V_c$ of the superimposition circuit 2 to the voltage corresponding to the current "i" (shown in Fig. 6 (b)) which passes through the primary coil 3. Since the detected voltage $V_{cs}$ includes a bias voltage, that is the superimposition voltage $V_c$, even if the circuit has a light load or receives a high input voltage, the S/N ratio of the detected voltage $V_{cs}$ is prevented from becoming worse, due to this superimposition voltage $V_c$.

In the fourth embodiment, in the same way as in each of the above-described embodiments, since the superimposition circuit 2 shown in Fig. 5 is provided, even when the circuit has a light load or receives a high input voltage, the S/N ratio of the detected voltage $V_{cs}$ is prevented from becoming worse. The switch control circuit 19 controls switching on and off of the switching element 7 largely without being adversely affected by the noise factor, and the output voltage $V_{out}$ is positively stabilized. Since, in the fourth embodiment, the superimposition circuit is provided in parallel to the gate G and the source S of the switching element 7, a power loss at the superimposition circuit is reduced more than in the first embodiment, in the same way as in the second embodiment.

Fig. 7 shows a fifth embodiment. In the fifth embodiment, the current sensing circuit 9 includes a current transformer 38, a reset resistor member 39, a sensing resistor 40, and a rectifying diode 41. Fig. 7 illustrates the case where a switching power supply having such a current sensing circuit is provided with a superimposition circuit 2. In the current sensing circuit 9, as is well known, the current "i" flowing through the primary coil 3 flows through the primary coil of the current transformer 38 during the switch-on period of the switching element 7, and a current is induced at the secondary coil of the current transformer 38. The secondary-coil current flows into the sensing resistor 40 through the rectifying diode 41 and is converted to a voltage. The voltage is output as a detected voltage $V_{cs}$. The configuration of components other than the current sensing circuit 9 and the superimposition circuit 2 is the same as that in each of the above-described embodiments, and the description thereof will be omitted.

The superimposition circuit 2 shown in Fig. 7 has a resistor 32 and is provided between the gate G of the switching element 7 and the sensing resistor 40 of the current sensing circuit 9. The specified superimposition current "$i_1$" is supplied to the sensing resistor 40 in the current sensing circuit 9 during the period when the switching element 7 is in the ON state, by using the gate pulse applied to the gate G of the switching element 7 from the switch control circuit 19.

In the fifth embodiment, the superimposition current "$i_1$" is supplied to the sensing resistor 40 of the current sensing circuit 9 during the switch-on period of the switching element 7. This means that a current in which the superimposition current "$i_1$" is added to the current flowing through the secondary coil of the current transformer 38 (which corresponds to the current "i" flowing through the primary coil 3) flows through the sensing resistor 40. Even when the secondary current of the current transformer 38 becomes low due to a light load or a high input voltage in the circuit, since the current flowing through the sensing resistor 40 is biased by the superimposition current "$i_1$" to become higher, the S/N ratio of the detected voltage $V_{cs}$ of the current sensing circuit 9 is prevented from decreasing in a light load or a high input voltage in the same way as in each of the above-described embodiments. The output voltage $V_{out}$ is positively stabilized even in a light load or a high input voltage. Since the input of the superimposition circuit 2 is connected to the gate G of the switching element 7, the power loss at the superimposition circuit is reduced in the same way as in the second embodiment.

Fig. 8 shows a sixth embodiment. The sixth embodiment differs from the first embodiment mainly in that a superimposition control circuit 42 is provided. The superimposition control circuit 42 controls the superimposition circuit 2 such that the circuit 2 performs superimposition only when the circuit current is reduced below the specified current (namely, only at a light load and a high input voltage), in order to make the power loss at the superimposition circuit 2 zero in cases other than a light load or a high input voltage. The other parts of the circuit configuration are the same as those in the first embodiment.

The superimposition control circuit 42 includes a resistor member 43, a capacitor 44, a comparator 45, a switching element 48 made up of a phototransistor 46 and a photodiode 47 constituting a photo-coupler, and a reference power supply 49. As shown in Fig. 8, point E where the resistor member 43 and the capacitor 44 are connected in parallel is connected to the non-inverting input terminal of the comparator 45, and point F where the resistor member 43 and the capacitor 44 are connected in parallel is connected to the inverting input terminal of the comparator 45 via the reference power supply 49. The output of the comparator 45 is connected to the photodiode 47 of the switching element 48 (photocoupler), and the phototransistor 46 of the switching element 48 is provided at the output of the superimposition circuit 2.

In the superimposition control circuit 42, the resistor member 43 detects and converts the output circuit current into a voltage, and the comparator 45 applies to the switching element 48 a voltage based on the difference between the detected voltage (namely, the voltage across the parallel-connection section of the resistor member 43 and the capacitor 44) and the reference voltage supplied from the reference power supply 49 having a predetermined value. In this embodiment, when the detected voltage is lower than the reference voltage, in other words, only when the circuit has a light load or receives a high input voltage and the circuit current decreases below the specified current, the photodiode 47 is turned on due to a decrease in the level of the output from the comparator 45, and the phototransistor 46 is turned on (namely, the switching element 48 is turned on). When the switching element 48 is turned on, the superimposition current "$i_1$" flows through the superimposition circuit 2, the superimposition current "$i_1$" is added to the current "i" flowing through the primary coil 3, and the current "$i + i_1$" flows into the current sensing circuit 9 during a switch-on period of the switching element 7, in the same way as in the first embodiment.

In the sixth embodiment, since the superimposition control circuit 42 is provided and the superimposition circuit 2 is controlled such that it performs current superimposition only when the circuit has a light load or receives a high input voltage and the circuit current is reduced below the specified value, power loss at the superimposition circuit 2 is eliminated in cases other than a light load or a high input voltage. Accordingly, power loss at the superimposition circuit 2 is reduced. In the same way as in the first embodiment, the output voltage $V_{out}$ is positively stabilized even at a light load or a high input voltage.

Fig. 9 shows a seventh embodiment. In the seventh embodiment, a superimposition control circuit 42 is provided in addition to the configuration according to the second embodiment, and the superimposition circuit 2 is controlled such that it performs current superimposition only at a light load and a high input voltage. The configuration of circuits other than the superimposition control circuit 42 is the same as that in the second embodiment, and the description thereof will be omitted.

The superimposition control circuit 42 includes a resistor member 51, a capacitor 52, a comparator 53, a reference power supply 54, and a transistor 55. An integrating circuit made up of the resistor member 51 and the capacitor 52 integrates the gate voltage of the switching element 7 during a switch-on period of the switching element 7. When the integrated voltage is lower than the predetermined reference voltage of the reference power supply 54, in other words, when the circuit has a light load or receives a high input voltage and the pulse width of the gate pulse signal for the switching element 7 becomes short so as to make the switching-on period of the switching element 7 short in order to stabilize the output voltage $V_{out}$, the transistor 55 is turned on and the superimposition current "$i_1$" is supplied to the current sensing circuit 9. Current superimposition is performed in this way in the superimposition circuit 2.

In the seventh embodiment, since the superimposition control circuit 42 is provided in addition to the configuration according to the second embodiment, the same advantages as those in the second embodiment are obtained and power loss at the superimposition circuit 2 is eliminated in cases other than a light load or a high input voltage. Accordingly, power loss at the superimposition circuit 2 is further reduced.

Fig. 10 shows an eighth embodiment. The eighth embodiment features a superimposition circuit 2 constituted by a superimposition diode 60. The superimposition circuit 2 applies a superimposition voltage $V_d$ shown in Fig. 11 (c) to the current sensing circuit 9 during a switch-on period of the switching element 7. The configuration of circuits other than the superimposition circuit 2 is the same as that in each of the above-described embodiments, and the description thereof will be omitted.

As described above, the superimposition circuit 2 includes the superimposition diode 60. The anode of the superimposition diode 60 is connected to the ground side of the resistor 8 of the current sensing circuit 9, and the cathode of the superimposition diode 60 is connected to ground. During a switch-on period of the switching element 7, a forward-direction voltage $V_d$ of predetermined magnitude is applied to the superimposition diode 60 and the forward-direction voltage $V_d$ is applied to the current sensing circuit 9 as a superimposition voltage. Therefore, during a switch-on period of the switching element 7, the current sensing circuit 9 outputs to the switch control circuit 19 the detected voltage $V_{cs}$ which is biased by the superimposition voltage $V_d$ as shown in Fig. 11 (d).

According to the eighth embodiment, since the superimposition circuit 2 made up of the superimposition diode 60 is provided, the superimposition voltage $V_d$ is applied to the current sensing circuit 9 during a switch-on period of the switching element 7. Therefore, in the same way as in the above-described embodiments, the S/N ratio of the detected voltage $V_{cs}$ in the current sensing circuit 9 is prevented from becoming worse even at a light load or a high input voltage. The switch control circuit 19 controls switching on and off of the switching element 7 largely without being adversely affected by noise in the detected voltage $V_{cs}$, and the output voltage $V_{out}$ is acceptably stabilized.

In the circuit configuration shown in Fig. 10, power loss $P_1$ occurring in the superimposition circuit 2 and the current sensing circuit 9 during a switch-on period of the switching element 7 is expressed by the following equation (1).

$$P_1 = i^2 \bullet R_8 + i \bullet V_d \quad (1)$$

where i indicates the current flowing through the superimposition circuit 2 and the current sensing circuit 9 during a switch-on period of the switching element 7, $R_8$ indicates the resistance of the resistor 8 in the current sensing circuit 9, and $V_d$ indicates the forward-direction voltage applied to the superimposition diode 60 during a switch-on period of the switching element 7.

In contrast, the power loss $P_2$ occurring in the superimposition circuit 2 and the current sensing circuit 9 of the circuit shown in Fig. 1 is expressed by the following equation (2).

$$P_2 = (i + i_1)^2 \bullet R_8 + i_1^2 \bullet R_{32} \quad (2)$$

where i indicates the current flowing through the resistor 8 of the current sensing circuit 9, $i_1$ indicates the current (superimposition current) flowing through the resistor 32 in the superimposition circuit 2, $R_8$ indicates the resistance of the resistor 8, and $R_{32}$ indicates the resistance of the resistor 32.

When the magnitude of the superimposition factor in the detected voltage $V_{cs}$ in the current sensing circuit 9 is the same in Fig. 1 and Fig. 10, namely, when $V_d = i \bullet R_8$, the following expression (3) is satisfied.

$$P_2 - P_1 = i \bullet i_1 \bullet R_8 + i_1^2 \bullet R_8 + i_1^2 \bullet R_{32} > 0 \quad (3)$$

This means that the power loss can be reduced to a greater extent in the circuit shown in Fig. 10 than in the circuit shown in Fig. 1. When $R_8 = 3\Omega$, $V_d$ = 300 mV, $R_{32}$ = 1 kΩ, i = 200 mA, $i_1$ = 100 mA, and the duty cycle (ratio of the switch-on period to the overall switching cycle period) in the switching element 7 is 0.5, the power loss $P_1$ in the circuit shown in Fig. 10 is as low as 0.09 W while the power loss $P_2$ in Fig. 1 is 5.1 W.

As described above, the eighth embodiment obtains the same advantages as in the above-described embodiments, and substantially reduces the power loss.

Fig.12 shows a ninth embodiment. In the ninth embodiment, a switching power supply having the current sensing circuit 9 shown in Fig. 7 is provided with a superimposition circuit 2 constituted by a superimposition diode 60. The other components are the same as those of the above-described embodiments, and the description thereof will be omitted.

In this embodiment, the superimposition circuit 2 is made up of the superimposition diode 60 as described above. The anode of the superimposition diode 60 is connected to the ground side of a sensing resistor 40 of the current sensing circuit 9 so that the forward-direction voltage $V_d$ of predetermined magnitude is applied during the switch-on period of the switching element 7. The superimposition circuit 2 applies the forward-direction voltage to be applied to the superimposition diode to the current sensing circuit 9 as a superimposition voltage $V_d$ during the switch-on period of the switching element 7. The current sensing circuit 9 outputs the detected voltage $V_{cs}$ which is biased by the superimposition voltage $V_d$ to a switch control circuit 19 in the same way as in the above-described embodiments.

According to the ninth embodiment, since the superimposition circuit 2 is provided and the superimposition voltage is applied to the current sensing circuit 9, the S/N ratio of the detected voltage $V_{cs}$ of the current sensing circuit 9 is prevented from decreasing even at a light load or a high input voltage, in the same way as in the above-described embodiments. Hence, the switch control circuit 19 satisfactorily stabilizes the output voltage $V_{out}$. Since the superimposition circuit 2 is made up of the superimposition diode 60 in the same way as in the eighth embodiment, power loss is reduced to a very low level.

The relationship between the forward-direction voltage across the diode 60 and the current flowing through it is illustrated in Fig.13. This will be described in further detail later on.

A tenth embodiment will be described below. In the tenth embodiment, a superimposition circuit 2 is made up of a resistor 32 and a superimposition diode 60 as shown in Fig. 14, and a superimposition current and a superimposition voltage are applied together to a current sensing circuit 9. Superimposition circuits 2 having this composition are also used in the embodiments shown in Figs. 15 to 19 (which otherwise correspond to the second, third, fifth, sixth and seventh embodiments). The other components are the same as those in the above-described embodiments, and the description thereof will be omitted.

In this tenth embodiment, the superimposition circuit 2 is made up of the resistor 32 and the superimposition diode 60 as described above. The resistor 32 supplies a superimposition current "$i_1$" to the current sensing circuit 9, and the superimposition diode 60 applies a superimposition voltage $V_d$ to the current sensing circuit 9.

According to the tenth embodiment, since the superimposition circuit 2 is provided in order to apply the superimposition current "$i_1$" and the superimposition voltage $V_d$ to the current sensing circuit 9, the current sensing circuit 9 converts a current which is biased by the superimposition current "$i_1$" to a voltage, and outputs this voltage plus the superimposition voltage $V_d$ to the switch control circuit 19 as a detected voltage $V_{cs}$. Therefore, the S/N ratio of the detected voltage $V_{cs}$ is positively prevented from decreasing even at a light load or a high input voltage. The current sensing circuit 9 applies a detected voltage $V_{cs}$ having a satisfactory S/N ratio to the switch control circuit 19. The switch control circuit 19 more positively stabilizes the output voltage $V_{out}$.

As described above, since the superimposition circuit 2 applies the superimposition current "$i_1$" and the superimposition voltage $V_d$ to the current sensing circuit 9, the superimposition current "$i_1$" can be reduced compared with a case in which the resistor 32 is provided alone. When the superimposition current "$i_1$" is reduced, power loss at the resistor 32 is reduced. Power loss at the superimposition circuit 2 and the current sensing circuit 9 shown in Fig. 14, for example, can be reduced to as low as one hundredth that of the superimposition circuit 2 and the current sensing circuit 9 shown in Fig. 1.

When the superimposition control circuit 42 shown in Fig. 18 or 19 is provided in the same way as in the sixth and seventh embodiments, since no current flows through resistor 32 in normal operation other than that with a light load or a high input voltage, because of the operation of the superimposition control circuit 42, power loss at the resistor 32 becomes zero in normal operation. Thus power loss is further reduced.

In embodiments such as those of Fig. 10 or 12, in which the superimposition circuit 2 is made up of superimposition diode 60 only, when a very low current flows through the primary coil 3, as in the case where the transformer 6 has a small winding ratio (a ratio of the number of turns on the primary coil 3 to that on the secondary coil 4) and is subjected to a light load, a low current flows through the superimposition diode 60. When the current flowing through the superimposition diode 60 becomes low, for example, as shown by $I_\alpha$ in Fig. 13 illustrating the relationship between the forward-direction voltage V of the diode and the current I flowing through it, the forward-direction voltage applied to the superimposition diode 60 becomes lower than the predetermined superimposition voltage $V_d$. This means that the desired value of superimposition voltage $V_d$ may not be applied to the current sensing circuit 9.

By contrast, when the resistor 32 is provided in addition to the superimposition diode 60 as in the present embodiments, the superimposition current "$i_1$" flowing through the resistor 32 flows into the current sensing circuit 9 and the superimposition diode 60, and the current flowing through the superimposition diode 60 is biased by the superimposition current "$i_1$." With this biased current, the forward-direction voltage of predetermined value is applied to the superimposition diode 60, and the superimposition diode 60 applies the predetermined superimposition voltage $V_d$ to the current sensing circuit 9.

The present invention is not limited to the above-described embodiments, instead it can be implemented in various different types of embodiment. In the above-described embodiments, a switching power supply of a flyback converter type having a transformer 6 is described. The same advantages as those provided by the above-described embodiments can be obtained by providing a superimposition circuit, or a superimposition circuit, and a superimposition control circuit for a switching power supply which controls a switching element in the current-mode control method even if the power supply is of a converter type other than the flyback converter type.

## Claims

1. A switching power supply having a switching element (7) selectively operable to enable supply of an output voltage ($V_{out}$) by the power supply; a current sensing circuit (9) for converting a current flowing through the switching element (7) into a voltage and for detecting and outputting said voltage ($V_{cs}$); an output-voltage detecting circuit (27) for detecting the voltage output by the power supply and outputting a voltage ($V_f$) indicative thereof; and a switch control circuit (19) of the current-mode control type for controlling the switch-on period of said switching element (7) so as to stabilize said power supply output voltage ($V_{out}$) according to the voltage ($V_f$) output by said output-voltage detecting circuit (27) and the conversion voltage ($V_{cs}$) output by said current sensing circuit (9), **characterized in that** there is provided superimposition circuit (2) for applying at least one of a substantially constant superimposition current ($i_1$) and a substantially constant superimposition voltage ($V_d$) to said current sensing circuit (9) during the entire period when said switching element (7) is in the ON state.

**2.** The switching power supply according to claim 1, wherein the superimposition circuit (2) is adapted for applying both a substantially constant superimposition current ($i_1$) and a substantially constant superimposition voltage ($V_d$) to said current sensing circuit (9) during the entire period when said switching element (7) is in the ON state.

**3.** A switching power supply according to Claim 1 or 2, wherein a circuit is provided for supplying a substantially constant superimposition voltage ($V_d$), said circuit comprising a superimposition diode (60) which generates the superimposition voltage.

**4.** A switching power supply according to any one of Claims 1, 2 and 3, further comprising a superimposition control circuit (42) for detecting a circuit current and for controlling said superimposition circuit (2) so as to perform superimposition operation only when the detected current is lower than a specified value.

## Patentansprüche

**1.** Eine Schaltleistungsversorgungseinrichtung mit folgenden Merkmalen: einem Schaltelement (7), das wahlweise betrieben werden kann, um eine Lieferung einer Ausgangsspannung ($V_{out}$) durch die Leistungsversorgungseinrichtung zu ermöglichen; einer Stromerfassungsschaltung (9) zum Umwandeln eines durch das Schaltelement (7) fließenden Stroms in eine Spannung und zum Erfassen und Ausgeben dieser Spannung ($V_{cs}$); einer Ausgangsspannungs-Erfassungs-Schaltung (27) zum Erfassen der von der Leistungsversorgungseinrichtung ausgegebenen Spannung und zum Ausgeben einer Spannung ($V_f$), die diese anzeigt; und einer Schaltsteuerschaltung (19) des Strommodus-Steuertyps zum Steuern der Einschaltdauer des Schaltelements (7), um die von der Leistungsversorgungseinrichtung ausgegebene Spannung ($V_{out}$) gemäß der von der Ausgangsspannungs-Erfassungs-Schaltung (27) ausgegebenen Spannung (Vf) und der von der Stromerfassungsschaltung (9) ausgegebenen Umwandlungsspannung ($V_{cs}$) zu stabilisieren, **dadurch gekennzeichnet, daß** eine Überlagerungsschaltung (2) zum Anlegen eines im wesentlichen konstanten Überlagerungsstroms ($i_1$) und/oder einer im wesentlichen konstanten Überlagerungsspannung ($V_d$) an die Stromerfassungsschaltung (9) während der gesamten Zeitdauer, in der das Schaltelement (7) sich in dem eingeschalteten Zustand befindet, vorgesehen ist.

**2.** Die Schaltleistungsversorgungseinrichtung gemäß Anspruch 1, bei der die Überlagerungsschaltung (2) zum Anlegen sowohl eines im wesentlichen konstanten Überlagerungsstroms ($i_1$) als auch einer im wesentlichen konstanten Überlagerungsspannung ($V_d$) an die Stromerfassungsschaltung während der gesamten Zeitdauer, in der das Schaltelement (7) sich im eingeschalteten Zustand befindet, angepaßt ist.

**3.** Eine Schaltleistungsversorgungseinrichtung gemäß Anspruch 1 oder 2, bei der eine Schaltung zum Liefern einer im wesentlichen konstanten Überlagerungsspannung ($V_d$) vorgesehen ist, wobei die Schaltung eine Überlagerungsdiode (60) aufweist, die die Überlagerungsspannung erzeugt.

**4.** Eine Schaltleistungsversorgungseinrichtung gemäß einem der Ansprüche 1, 2 und 3, die ferner eine Überlagerungssteuerschaltung (42) zum Erfassen eines Schaltungsstroms und zum Steuern der Überlagerungsschaltung (2) aufweist, um eine Überlagerungsoperation nur dann durchzuführen, wenn der erfaßte Strom niedriger ist als ein spezifizierter Wert.

## Revendications

**1.** Alimentation à découpage possédant un élément de commutation (7) pouvant sélectivement agir pour permettre la délivrance d'une tension de sortie ($V_{out}$) par l'alimentation, un circuit de détection de courant (9) servant à convertir un courant qui passe dans l'élément de commutation (7) en une tension et à détecter et délivrer ladite tension ($V_{cs}$) ; un circuit (27) de détection de tension de sortie servant à détecter la tension délivrée par l'alimentation et à délivrer une tension ($V_f$) indicative de celle-ci ; et un circuit de commande de commutation (19) du type à commande en mode courant servant à commander la période de commutation dans l'état conducteur dudit élément de commutation (7) afin de stabiliser ladite tension de sortie ($V_{out}$) de l'alimentation en fonction de la tension ($V_f$) délivrée par ledit circuit (27) de détection de tension de sortie et de la tension de conversion ($V_{cs}$) délivrée par ledit circuit de détection de courant (9), l'alimentation étant **caractérisée en ce qu'**il est prévu un circuit de superposition (2) servant à appliquer audit circuit de détection de courant (9) au moins une des entités que constituent un courant de superposition sensiblement constant ($i_1$) et une tension de superposition sensiblement constante ($V_d$) pendant toute la durée pendant laquelle ledit élément de commutation (7) est dans l'état conducteur.

**2.** Alimentation à découpage selon la revendication 1, où le circuit de superposition (2) est destiné à appliquer à la fois un courant de superposition sensiblement constant ($i_1$) et une tension de superposition sensiblement constante ($V_d$) audit circuit de détection de courant (9) pendant toute la durée pendant laquelle ledit élément de commutation (7) est dans l'état conducteur.

**3.** Alimentation à découpage selon la revendication 1 ou 2, où un circuit est prévu pour fournir une tension de superposition sensiblement constante ($V_d$), ledit circuit comprenant une diode de superposition (60) qui produit la tension de superposition.

**4.** Alimentation à découpage selon l'une quelconque des revendications 1, 2 et 3, comprenant en outre un circuit de commande de superposition (42) servant à détecter un courant de circuit et à commander ledit circuit de superposition (2) de façon à n'effectuer l'opération de superposition que lorsque le courant détecté est inférieur à une intensité spécifiée.

FIG.1

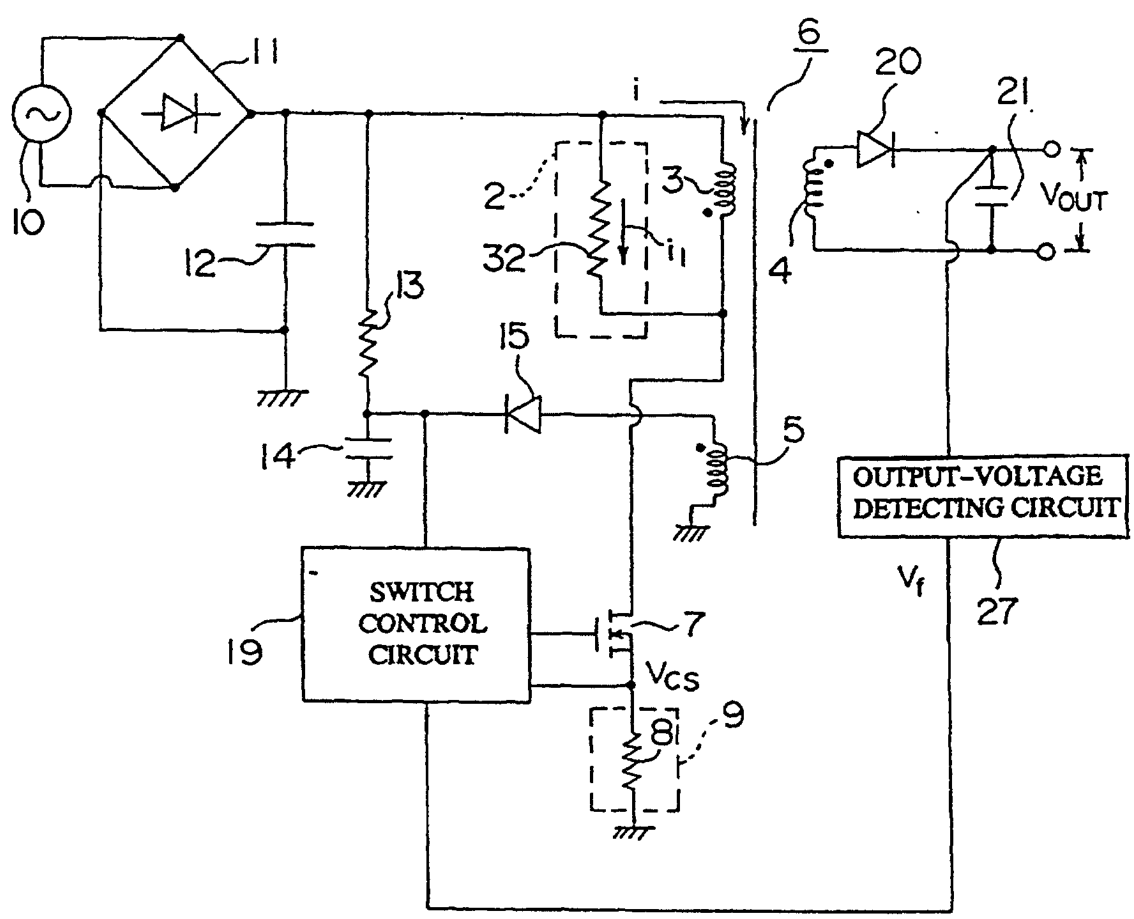

11
10
12
13
14
15
6
i
2
3
32
i1
4
5
20
21
VOUT
OUTPUT-VOLTAGE DETECTING CIRCUIT
Vf
27
SWITCH CONTROL CIRCUIT
19
7
Vcs
8
9

FIG.2

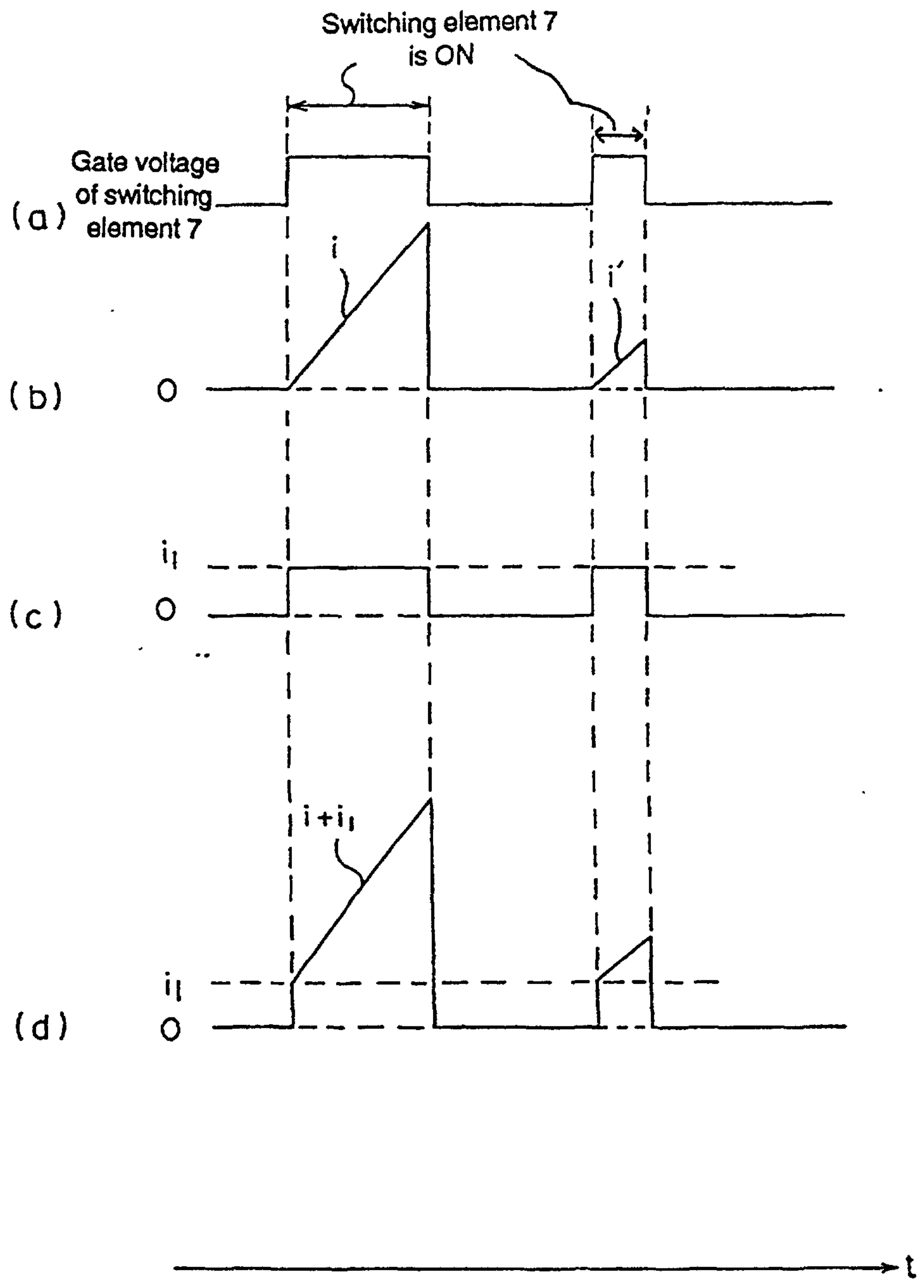

Switching element 7
is ON
Gate voltage
of switching
element 7
(a)
i
i'
(b)
0
$i_1$
(c)
0
i+$i_1$
$i_1$
(d)
0
t

FIG.3

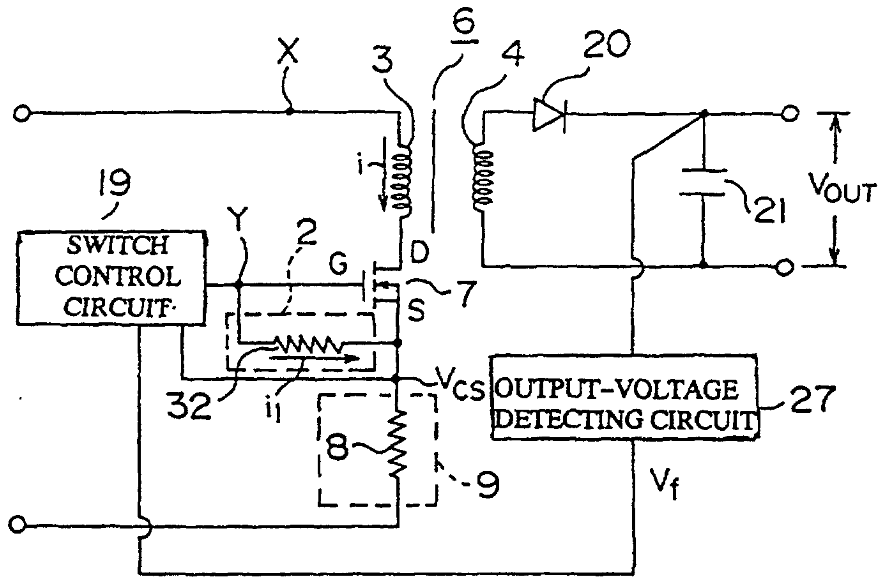
X
3
6
4
20
i
19
SWITCH CONTROL CIRCUIT
Y
2
G
D
S
7
21
VOUT
32
i1
VCS
OUTPUT-VOLTAGE DETECTING CIRCUIT
27
8
9
Vf

FIG.4

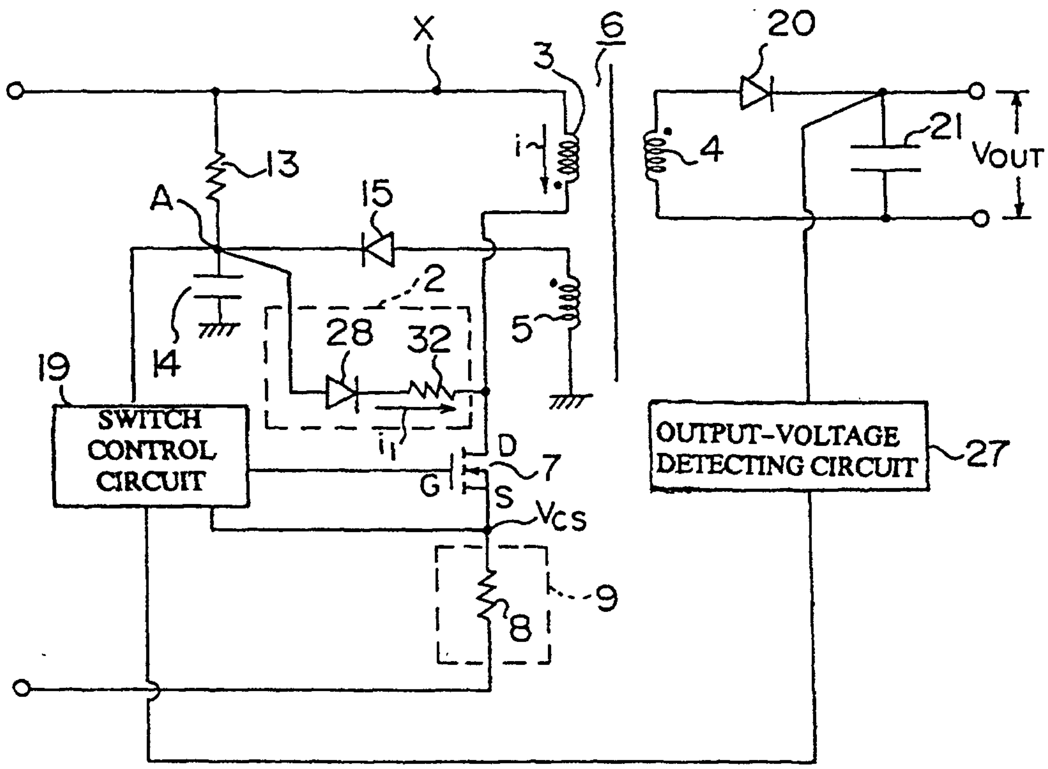
X
3
6
20
i
4
21
VOUT
13
A
15
2
5
28
32
19
14
SWITCH CONTROL CIRCUIT
i1
D
7
G
S
VCS
OUTPUT-VOLTAGE DETECTING CIRCUIT
27
9
8

FIG.5

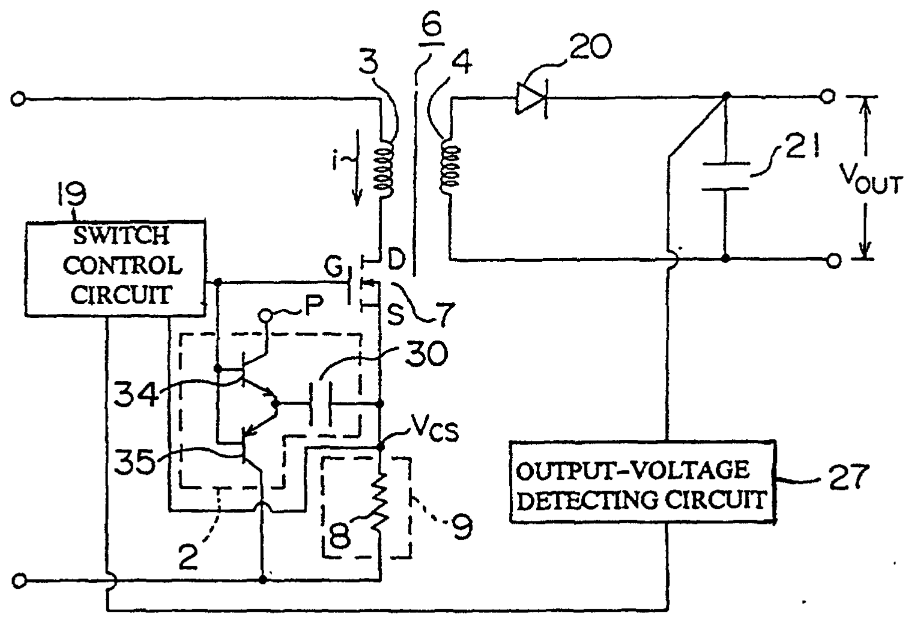
6
3
4
20
i
21
VOUT
19
SWITCH CONTROL CIRCUIT
G
D
S
7
P
30
34
VCS
35
OUTPUT-VOLTAGE DETECTING CIRCUIT
27
8
9
2

FIG.6

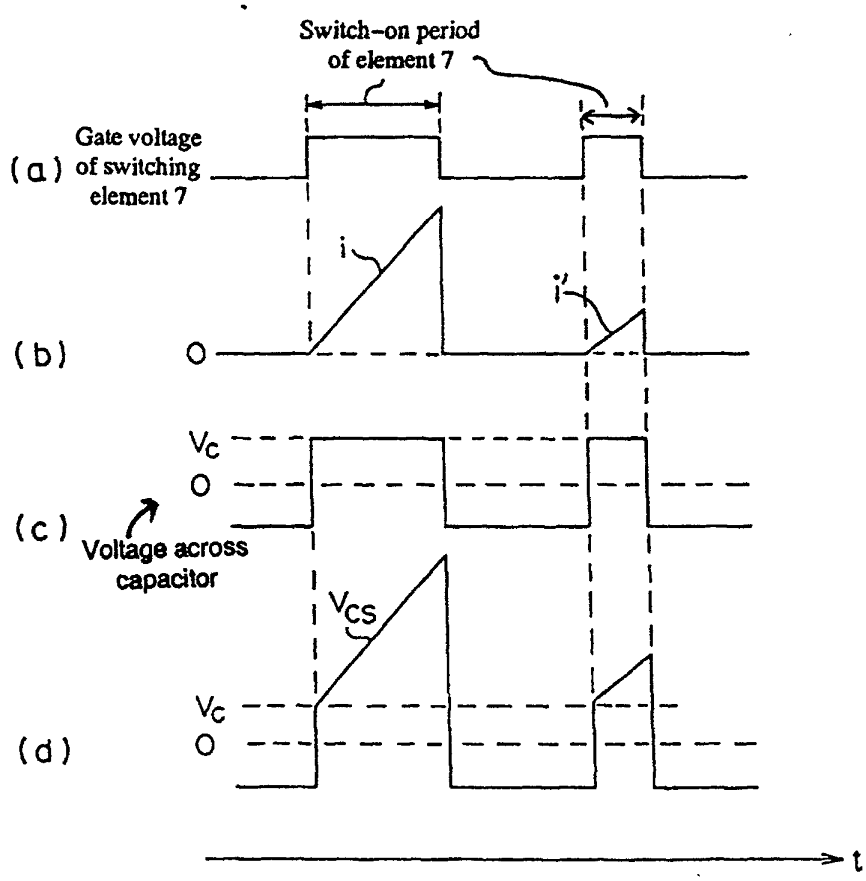
Switch-on period of element 7
(a) Gate voltage of switching element 7
i
i'
(b)
0
Vc
0
(c)
Voltage across capacitor
VCS
Vc
0
(d)
t

FIG.7

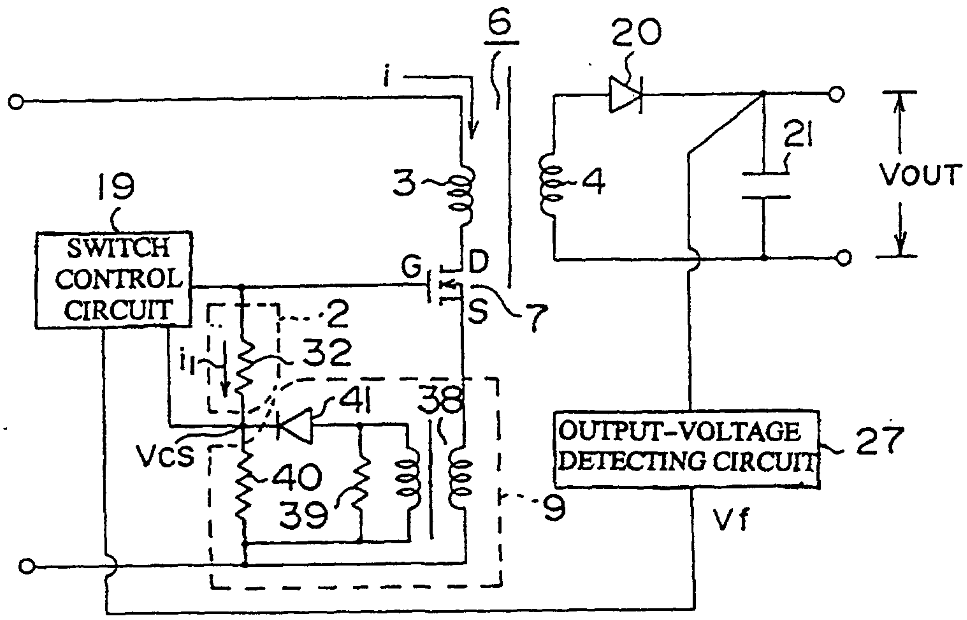
6
20
i
21
VOUT
3
4
19
SWITCH CONTROL CIRCUIT
G
D
S
7
2
32
i1
41
38
Vcs
40
39
9
OUTPUT-VOLTAGE DETECTING CIRCUIT
27
Vf

FIG.8

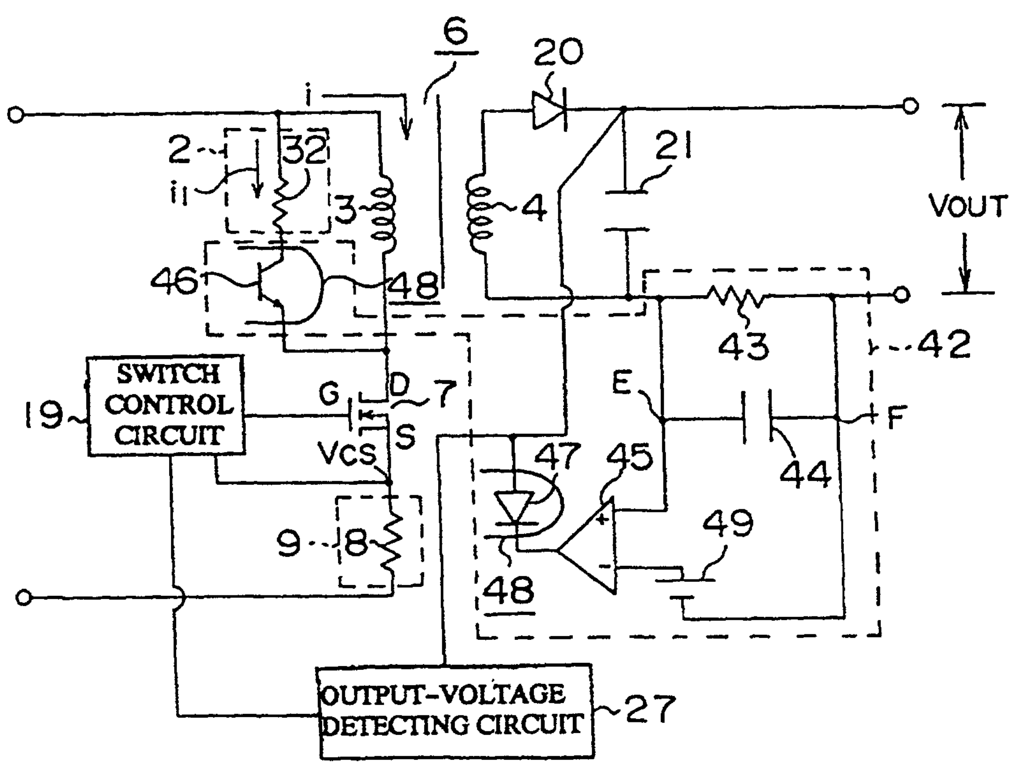
6
20
i
2
32
i1
3
4
21
VOUT
46
48
43
42
SWITCH CONTROL CIRCUIT
19
G
D
7
S
Vcs
E
F
47
45
44
49
9
8
48
OUTPUT-VOLTAGE DETECTING CIRCUIT
27

FIG.9

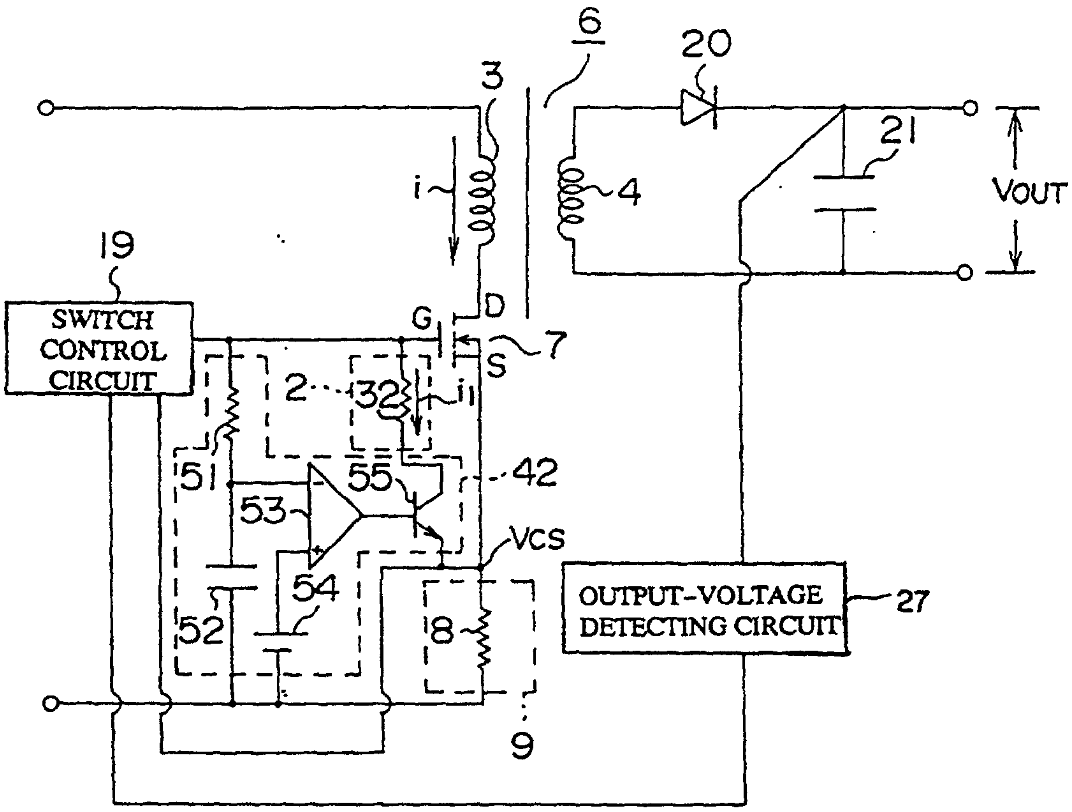
6
20
3
21
i
4
VOUT
19
SWITCH CONTROL CIRCUIT
G
D
7
S
2
32
i1
51
55
42
53
VCS
54
52
8
OUTPUT-VOLTAGE DETECTING CIRCUIT
27
9

FIG.10

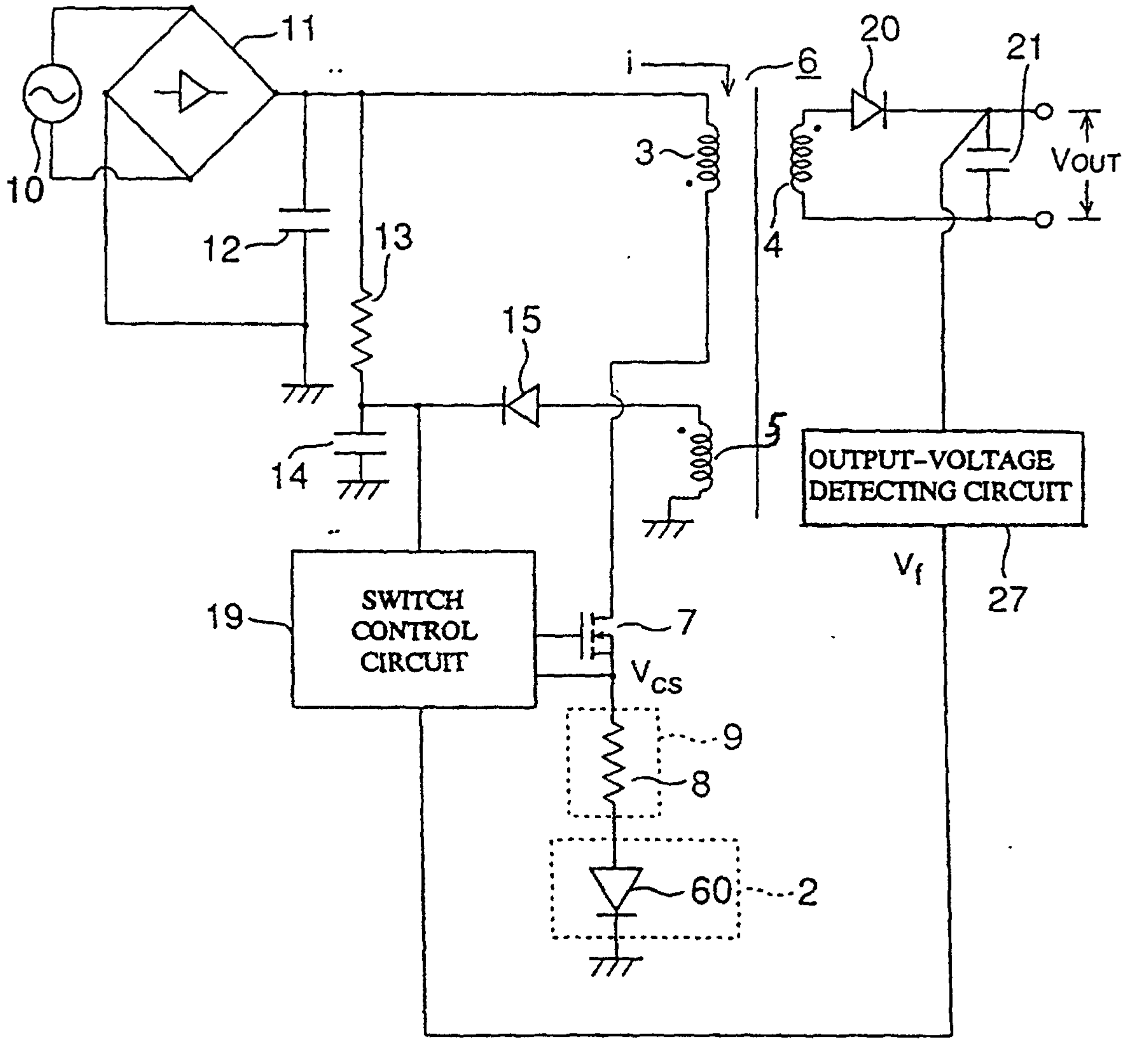
11
10
i
6
20
21
3
4
$V_{OUT}$
12
13
15
5
14
OUTPUT-VOLTAGE DETECTING CIRCUIT
$V_f$
27
19
SWITCH CONTROL CIRCUIT
7
$V_{CS}$
9
8
60
2

FIG.11

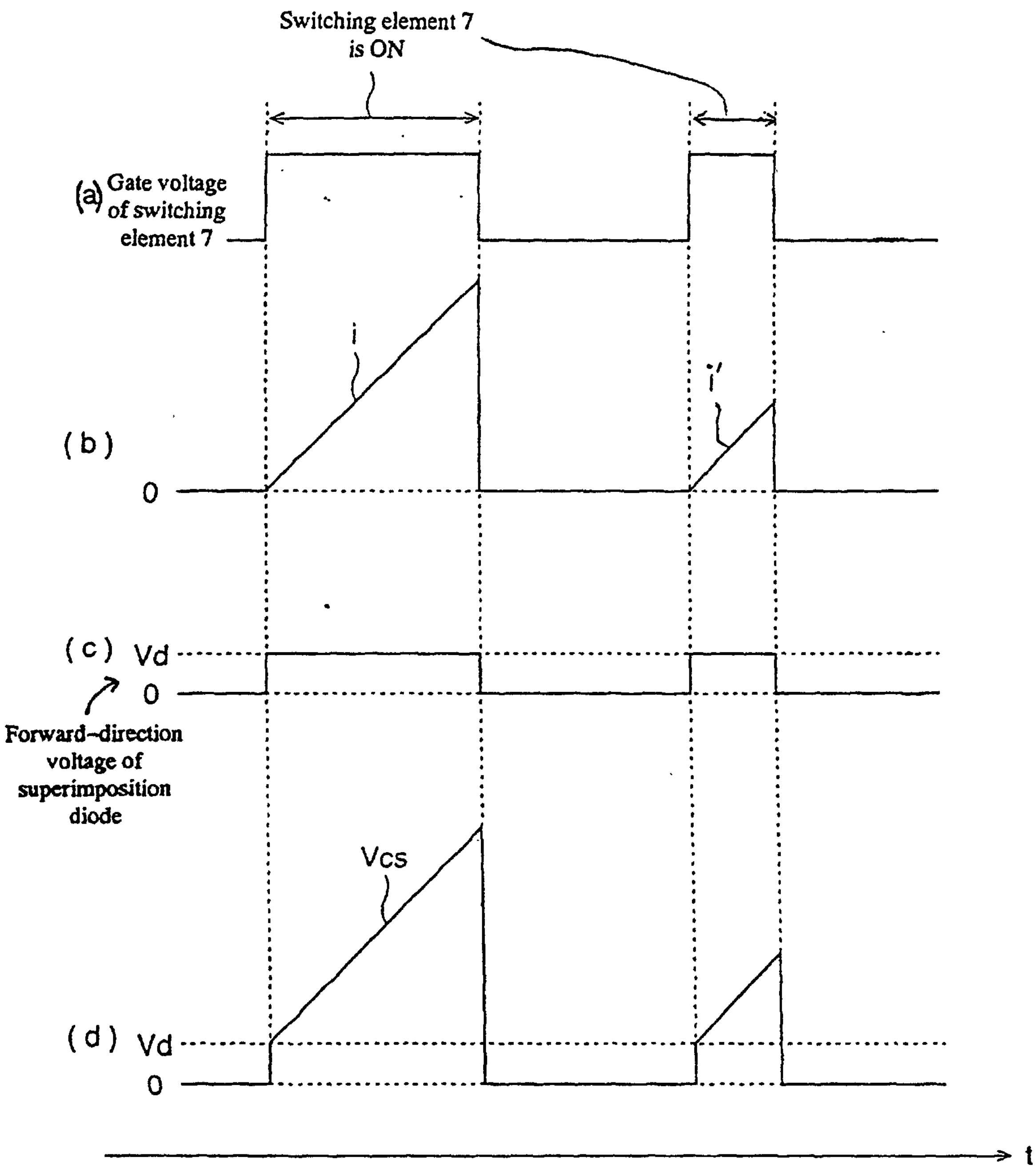

Switching element 7
is ON
(a) Gate voltage
of switching
element 7
i
i'
(b)
0
(c) Vd
0
Forward-direction
voltage of
superimposition
diode
Vcs
(d) Vd
0
t

FIG.12

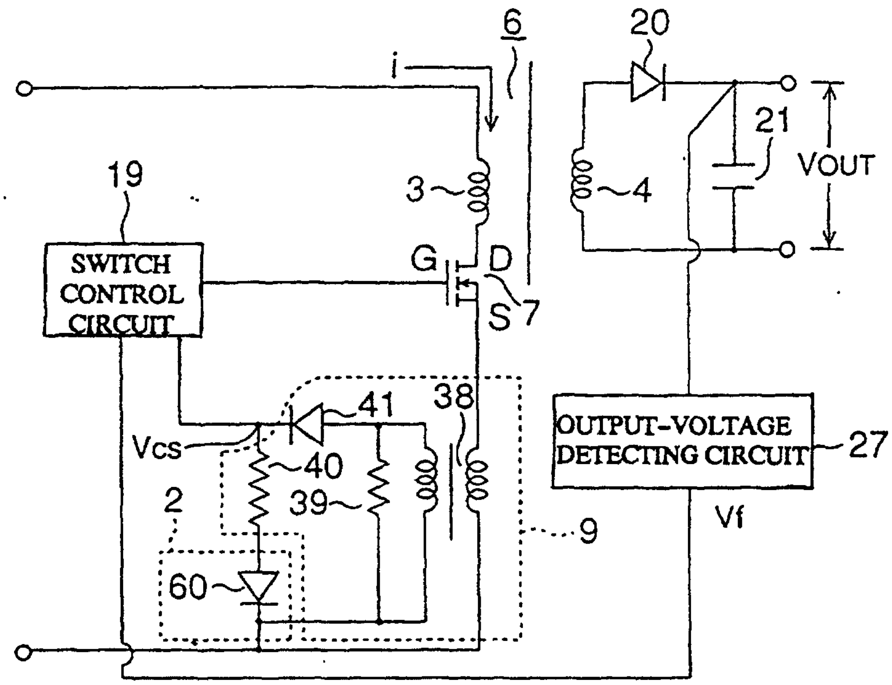

6
20
i
21
VOUT
19
3
4
SWITCH CONTROL CIRCUIT
G
D
S
7
41
38
OUTPUT-VOLTAGE DETECTING CIRCUIT
27
Vcs
40
39
2
9
Vf
60


FIG.13

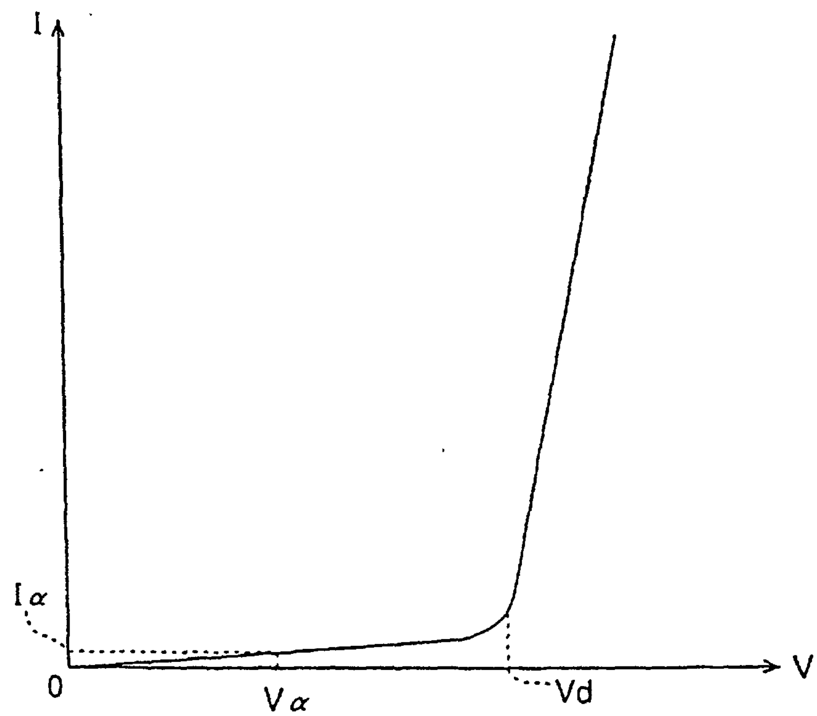

I
Iα
0
Vα
Vd
V

FIG.14

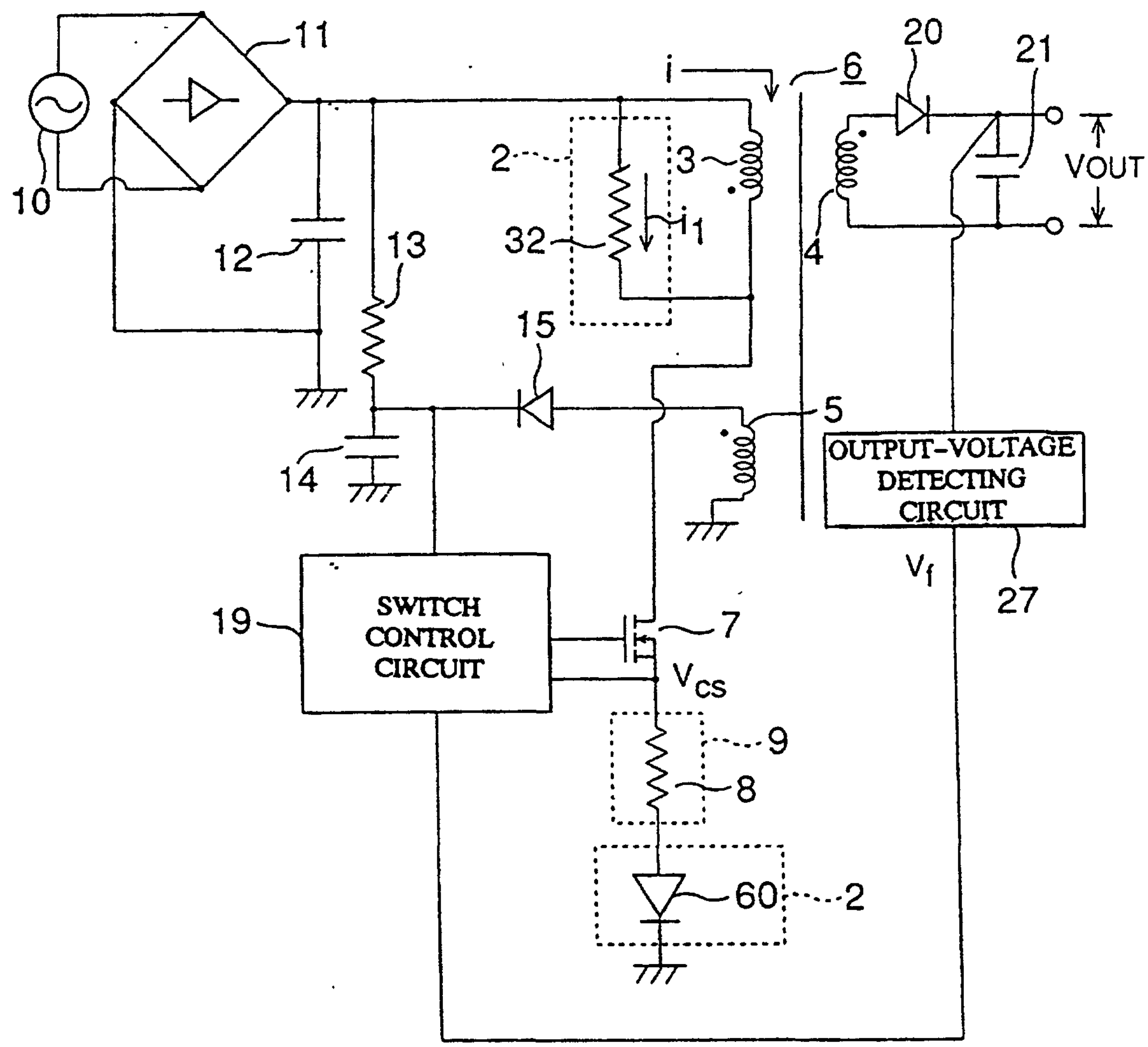
11
10
12
13
2
32
3
i
i1
6
20
21
VOUT
4
15
5
14
OUTPUT-VOLTAGE DETECTING CIRCUIT
27
Vf
19
SWITCH CONTROL CIRCUIT
7
Vcs
9
8
60
2

FIG.15

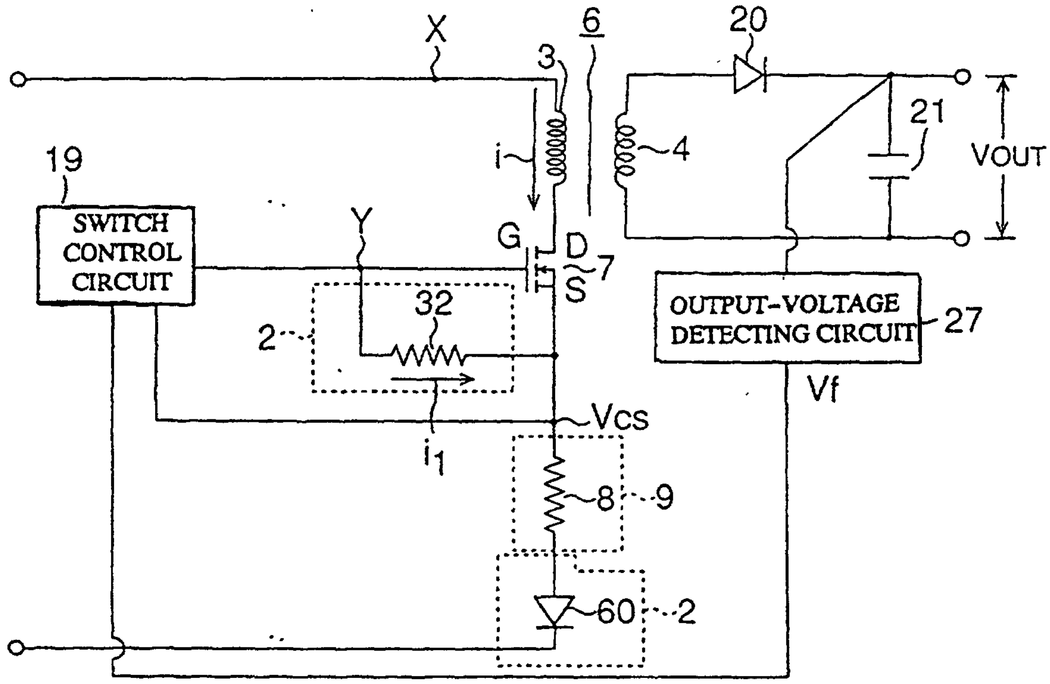
X
6
20
3
21
i
4
VOUT
19
SWITCH CONTROL CIRCUIT
Y
G
D
7
S
32
2
OUTPUT-VOLTAGE DETECTING CIRCUIT
27
Vf
Vcs
i1
8
9
60
2

FIG.16

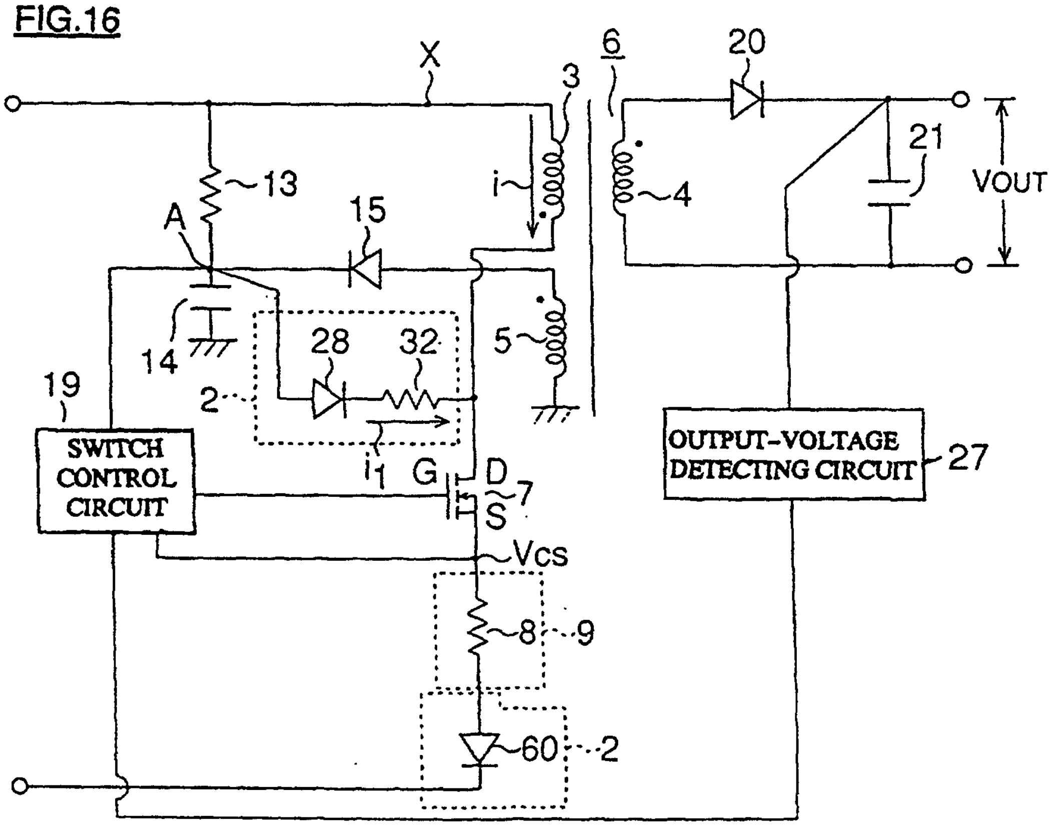
X
6
20
3
21
i
13
4
VOUT
A
15
14
28
32
5
19
2
SWITCH CONTROL CIRCUIT
i1
G
D
7
S
OUTPUT-VOLTAGE DETECTING CIRCUIT
27
Vcs
8
9
60
2

FIG.17

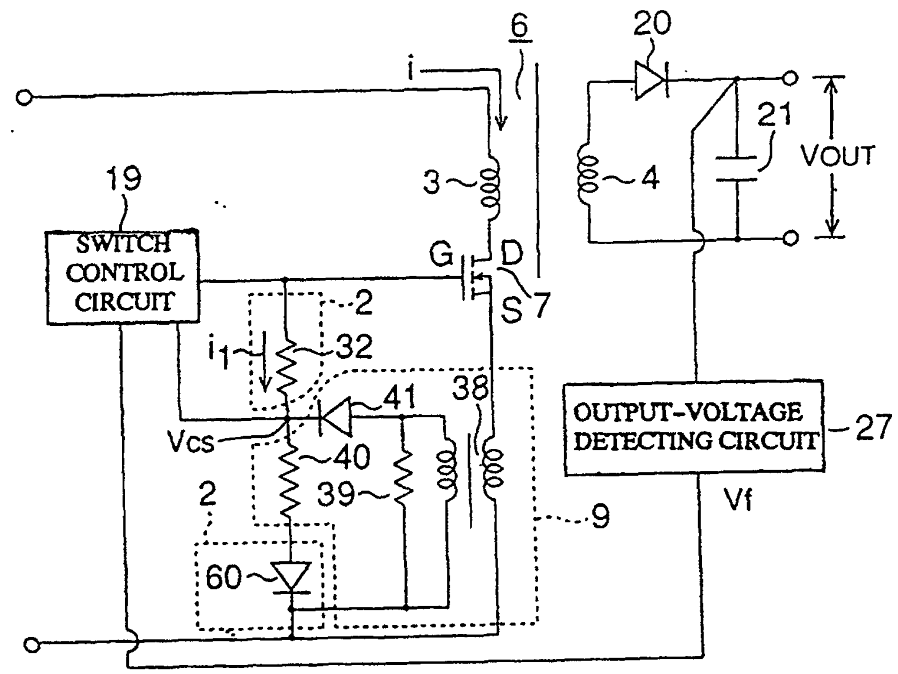
6
20
i
21
VOUT
19
3
4
SWITCH CONTROL CIRCUIT
G
D
S
7
2
i1
32
41
38
Vcs
40
OUTPUT-VOLTAGE DETECTING CIRCUIT
27
2
39
9
Vf
60

FIG.18

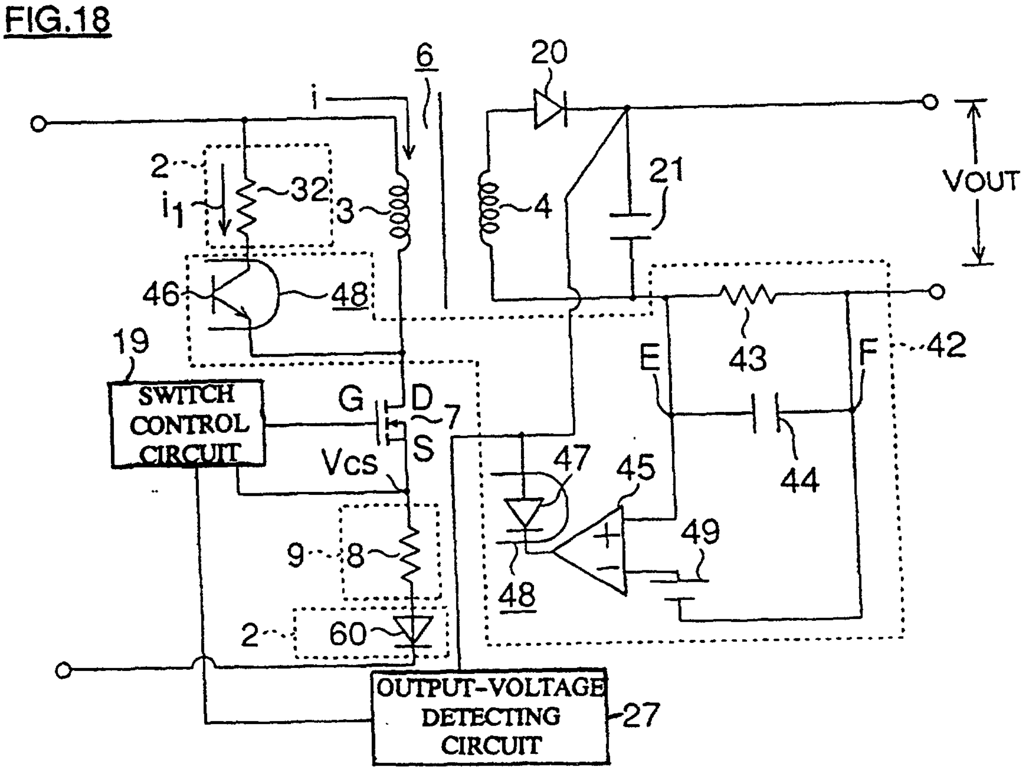
6
20
i
2
32
i1
3
21
4
VOUT
46
48
19
E
43
F
42
SWITCH CONTROL CIRCUIT
G
D
7
S
Vcs
47
45
44
49
9
8
48
2
60
OUTPUT-VOLTAGE DETECTING CIRCUIT
27

FIG.19

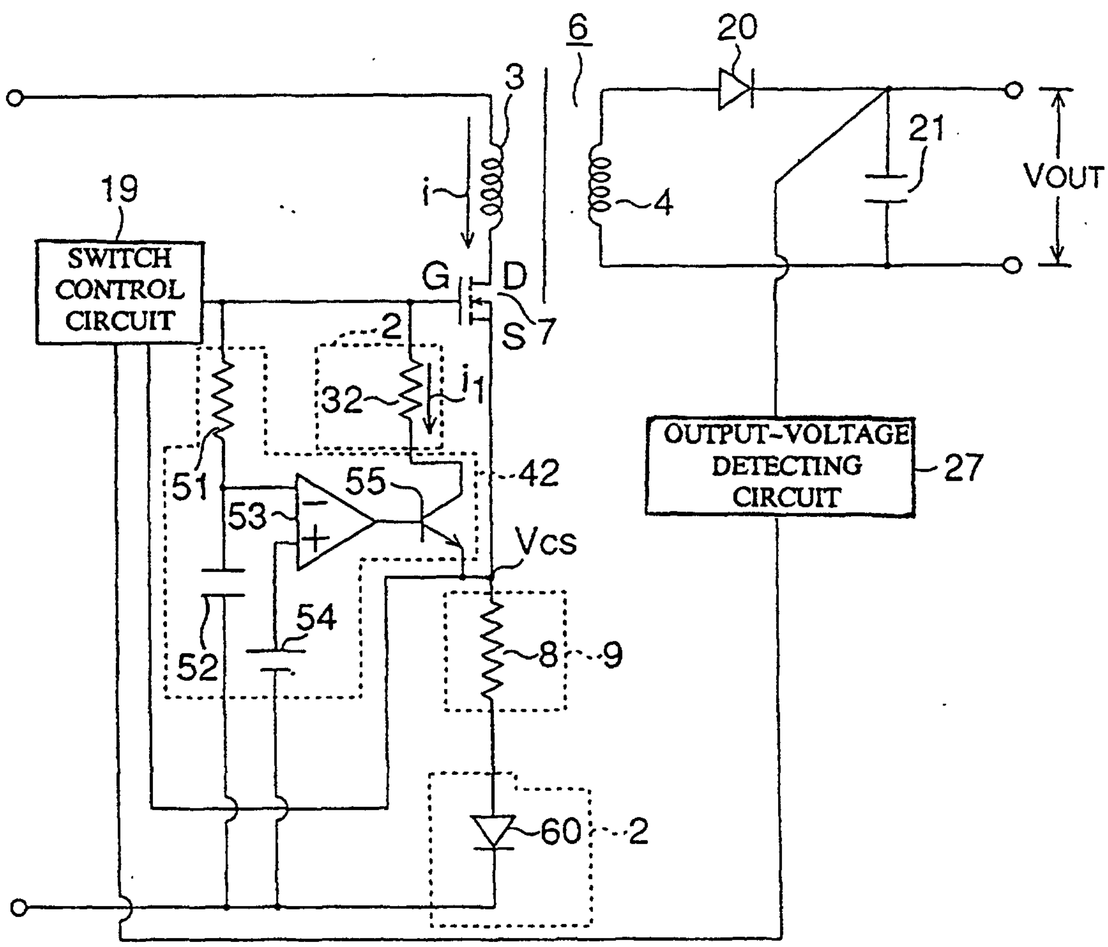

SWITCH CONTROL CIRCUIT
OUTPUT-VOLTAGE DETECTING CIRCUIT
VOUT
Vcs
G
D
S
i
i1
2
3
4
6
7
8
9
19
20
21
27
32
42
51
52
53
54
55
60

FIG.20

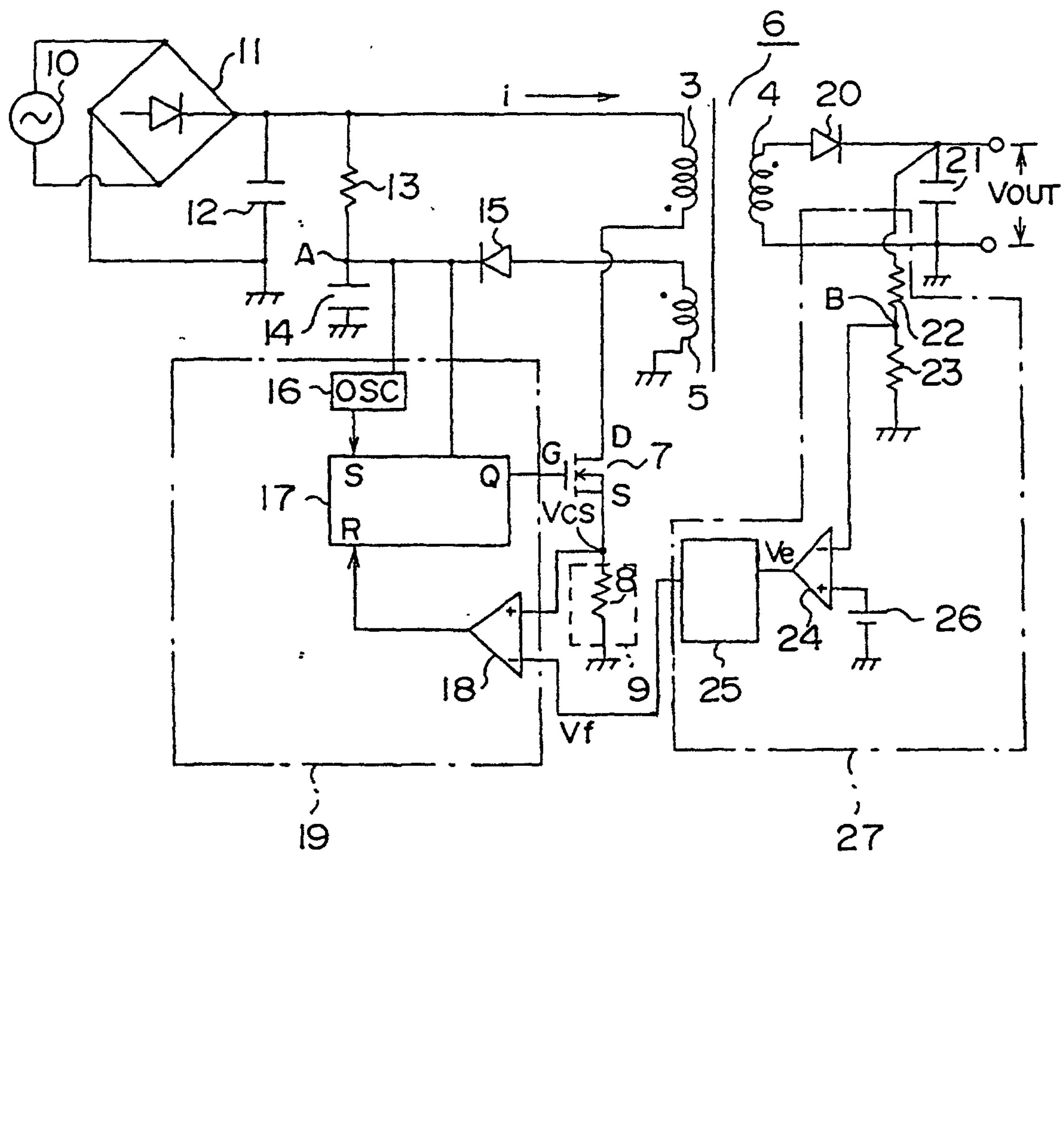
10
11
i
3
6
4
20
21
VOUT
12
13
15
A
14
5
B
22
23
16
OSC
17
S
R
Q
G
D
S
7
VCS
8
9
18
Vf
19
Ve
24
26
25
27

FIG.21

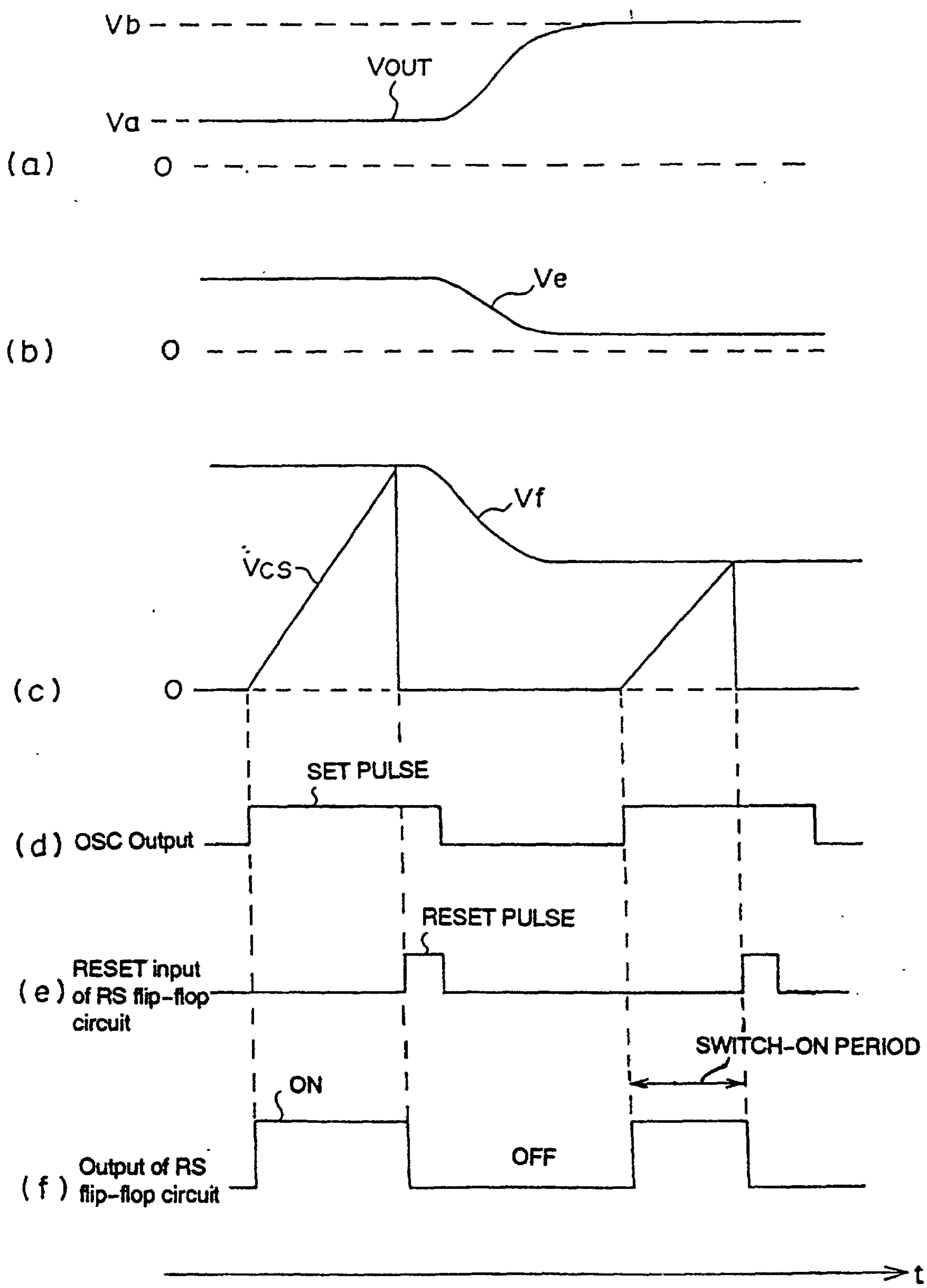

Vb
VOUT
Va
(a)
O
Ve
(b)
O
Vf
VCS
(c)
O
SET PULSE
(d) OSC Output
RESET PULSE
(e) RESET input of RS flip-flop circuit
SWITCH-ON PERIOD
ON
OFF
(f) Output of RS flip-flop circuit
t